# EUROPEAN PATENT APPLICATION

(11) **EP 4 472 283 A1**
(43) Date of publication of application: **04.12.2024**
(21) Application number: 23746169.4
(22) Date of filing: 18.01.2023
(51) Int. Cl.: H04W 36/00

(54) **DATA TRANSMISSION METHOD AND APPARATUS, DEVICE, AND STORAGE MEDIUM**

(30) Priority: 29.01.2022 CN 202210112952
(71) Applicant: Datang Mobile Communications Equipment Co., Ltd., Beijing 100085 (CN)
(72) Inventor: CHEN, Li, Beijing 100085 (CN)
(74) Representative: Studio Torta S.p.A.
(86) International application number: PCT/CN2023/072809
(87) International publication number: WO 2023/143287

(57) **Abstract**

Embodiments of the present disclosure relate to the technical field of communications, and provide a data transmission method and apparatus, a device, and a storage medium. The method comprises: when it is determined that a terminal is in a cell change, determining that a target PDU set which has not been completely transmitted successfully is present, wherein none or not all of PDUs belonging to the target PDU set which has not been completely transmitted successfully have been sent or have been successfully sent; and determining a transmission processing mode of the target PDU set. According to the embodiments of the present disclosure, when it is determined that the terminal is in a cell change, it is determined that a target PDU set which has not been completely transmitted successfully is present, and the transmission processing mode of the target PDU set is then determined, so that the transmission accuracy of the target PDU set is ensured, and resources are saved.

## Description

### CROSS-REFERENCES TO RELATED APPLICATIONS

The present application claims priority to Chinese application No. 202210112952.7 filed on January 29, 2022, entitled "Data Transmission Method, Apparatus, Device and Storage Medium", which is hereby incorporated by reference in its entirety

### FIELD

The present application relates to the field of communication, and particular to a method and an apparatus for data transmission, a device and a storage medium.

### BACKGROUND

Data transmission for extended reality (XR) has characteristics of massive volumes of data and a restrict requirement for latency.

An XR data frame may be split into multiple Internet Protocol (IP) data packets. In case that one or several IP data packets are transmitted incorrectly, the data frame cannot be correctly parsed even if other IP packets of the data frame are transmitted correctly. In case that one or several IP data packets in the XR data frame may be transmitted incorrectly as a terminal is in a cell change, the XR data frame therefore cannot be correctly parsed, resulting in low transmission accuracy of XR data frame and waste of resources.

### BRIEF SUMMARY

Embodiments of the present application provide a method and an apparatus for data transmission, a device and a storage medium, to solve defects of low transmission accuracy of XR data frames resulting in reduced data efficiency in the related art, ensuring the transmission accuracy of the XR data frames and saving resources.

An embodiment of the present application provides a method for data transmission, including:
determining that there is a target protocol data unit (PDU) set that is not transmitted completely and successfully in case of determining that a terminal is in a cell change, where all or part of PDUs belonging to the target PDU set that is not transmitted completely and successfully are not transmitted or are not transmitted successfully; and
determining a transmission processing mode of the target PDU set.

In the method for data transmission of an embodiment of the present application, the transmission processing mode of the target PDU set includes:
transmitting, at a source base station, all PDUs belonging to the target PDU set completely, where the source base station is a base station which the terminal accesses before handover.

In the method for data transmission of an embodiment of the present application, the target PDU set is downlink data, and a target communication device is a source base station;
determining that the terminal is in the cell change includes:
determining to transmit a handover command to the terminal based on a measurement report of the terminal;
transmitting, at the source base station, all PDUs belonging to the target PDU set completely includes:
   transmitting all PDUs belonging to the target PDU set to the terminal before transmitting the handover command to the terminal.

In the method for data transmission of an embodiment of the present application, the target PDU set is uplink data, and a target communication device is a terminal;
determining that the terminal is in the cell change includes:
receiving a handover command transmitted from a source base station; and
determining, based on the handover command, to disconnect from the source base station and access a target base station, where the target base station is a base station which the terminal accesses after completing handover;
transmitting, at the source base station, all PDUs belonging to the target PDU set completely includes:
   transmitting all PDUs belonging to the target PDU set to the source base station before disconnecting from the source base station.

In the method for data transmission of an embodiment of the present application, a last uplink transmitted PDU of all PDUs belonging to the target PDU set includes an end marker, and the end marker is used for indicating that the PDU is the last PDU of all PDUs belonging to the target PDU set.

In the method for data transmission of an embodiment of the present application, the transmission processing mode of the target PDU set includes:
transmitting, at a target base station, all PDUs belonging to the target PDU set completely.

In the method for data transmission of an embodiment of the present application, the target PDU set is downlink data, and a target communication device is a source base station;
determining that the terminal is in the cell change includes:
determining to transmit a handover command to the terminal based on a measurement report of the terminal;
transmitting, at the target base station, all PDUs belonging to the target PDU set completely includes:
   transmitting all PDUs belonging to the target PDU set to the target base station in case of determining to transmit the handover command to the terminal.

In the method for data transmission of an embodiment of the present application, the target PDU set is downlink data, and a target communication device is a target base station;
determining that the terminal is in the cell change includes:
receiving a handover request transmitted from a source base station; and
transmitting handover request acknowledgement information to the source base station, where the handover request acknowledgement information is used for triggering the source base station to transmit a handover command to the terminal;
transmitting, at the target base station, all PDUs belonging to the target PDU set completely includes:
   receiving all PDUs belonging to the target PDU set transmitted from the source base station; and
   transmitting all PDUs belonging to the target PDU set to the terminal after the terminal completes handover.

In the method for data transmission of an embodiment of the present application, the target PDU set is uplink data, and a target communication device is a terminal;
determining that the terminal is in the cell change includes:
receiving a handover command transmitted from a source base station; and
determining, based on the handover command, to disconnect from the source base station and access a target base station;
transmitting, at the target base station, all PDUs belonging to the target PDU set completely includes:
   transmitting all PDUs belonging to the target PDU set to the target base station after the terminal completes handover and accesses the target base station.

In the method for data transmission of an embodiment of the present application, the transmission processing mode of the target PDU set includes:
transmitting a first data packet at a target base station, where the first data packet includes a PDU in the target PDU set that is not transmitted to a communication peer and/or a PDU that is not successfully transmitted to a communication peer.

In the method for data transmission of an embodiment of the present application, the target PDU set is downlink data, and a target communication device is a source base station;
determining that the terminal is in the cell change includes:
receiving a handover success message transmitted from the target base station after the source base station transmits a conditional handover configuration to the terminal;
transmitting the first data packet at the target base station includes:
   transmitting the first data packet to the target base station after the source base station receives the handover success message.

In the method for data transmission of an embodiment of the present application, the target PDU set is downlink data, and a target communication device is a target base station;
determining that the terminal is in the cell change includes:
transmitting a handover success message to a source base station after the terminal completes handover and accesses the target base station;
transmitting the first data packet at the target base station includes:
   receiving the first data packet transmitted from the source base station; and
   transmitting the first data packet to the terminal.

In the method for data transmission of an embodiment of the present application, the target PDU set is downlink data, and a target communication device is a source base station;
determining that the terminal is in the cell change includes:
determining to transmit a handover command to the terminal based on a measurement report of the terminal;
transmitting the first data packet at the target base station includes:
   transmitting the first data packet to the target base station in case of determining to transmit the handover command to the terminal.

In the method for data transmission of an embodiment of the present application, the target PDU set is downlink data, and a target communication device is a target base station;
determining that the terminal is in the cell change includes:
receiving a handover request transmitted from a source base station; and
transmitting handover request acknowledgement information to the source base station, where the handover request acknowledgement information is used for triggering the source base station to transmit a handover command to the terminal;
transmitting the first data packet at the target base station includes:
   receiving the first data packet transmitted from the source base station; and
   transmitting the first data packet to the terminal after the terminal completes handover.

In the method for data transmission of an embodiment of the present application, the target PDU set is uplink data, and a target communication device is a terminal;
determining that the terminal is in the cell change includes:
receiving a handover command transmitted from a source base station; and
determining, based on the handover command, to disconnect from the source base station and access a target base station;
transmitting the first data packet at the target base station includes:
   transmitting the first data packet to the target base station after the terminal completes handover and accesses the target base station.

In the method for data transmission of an embodiment of the present application, the target PDU set is uplink data, and a target communication device is a terminal;
determining that the terminal is in the cell change includes:
determining that the terminal is in a conditional handover scenario based on a configuration of a target cell and a handover condition, and accessing the target base station in case that the handover condition is satisfied;
transmitting the first data packet at the target base station includes:
   transmitting the first data packet to the target base station after the terminal completes handover and accesses the target base station.

In the method for data transmission of an embodiment of the present application, the transmission processing mode of the target PDU set includes:
dropping a second data packet, where the second data packet is a PDU in the target PDU set that is not transmitted to a communication peer and/or a PDU that is not successfully transmitted to a communication peer.

In the method for data transmission of an embodiment of the present application, the target PDU set is downlink data, and a target communication device is a source base station;
determining that the terminal is in the cell change includes:
receiving a handover success message transmitted from the target base station after the source base station transmits a conditional handover configuration to the terminal;
dropping the second data packet includes:
   dropping the second data packet after the source base station receives the handover success message.

In the method for data transmission of an embodiment of the present application, the target PDU set is downlink data, and a target communication device is a source base station;
determining that the terminal is in the cell change includes:
determining to transmit a handover command to the terminal based on a measurement report of the terminal;
dropping the second data packet includes:
   dropping the second data packet in case of determining to transmit the handover command to the terminal.

In the method for data transmission of an embodiment of the present application, the target PDU set is uplink data, and a target communication device is a terminal;
determining that the terminal is in the cell change includes:
receiving a handover command transmitted from a source base station; and
determining, based on the handover command, to disconnect from the source base station and access a target base station;
dropping the second data packet includes:
   dropping the second data packet after receiving the handover command.

In the method for data transmission of an embodiment of the present application, the target PDU set is uplink data, and a target communication device is a terminal;
determining that the terminal is in the cell change includes:
determining that the terminal is in a conditional handover scenario based on a configuration of a target cell and a handover condition, and accessing the target base station in case that the handover condition is satisfied;
dropping the second data packet includes:
   dropping the second data packet in case of determining that the handover condition is satisfied.

In the method for data transmission of an embodiment of the present application, the target PDU set is uplink data, and the target communication device is a source base station or a target base station;
the method further includes:
transmitting an identifier of the target PDU set to the terminal, where the identifier is used for indicating the target PDU set using the transmission processing mode.

An embodiment of the present application further provides a target communication device, including:
a memory used for storing a computer program; a transceiver used for transmitting and receiving data under control of a processor; and the processor used for reading the computer program in the memory and performing the following operations:
determining that there is a target protocol data unit (PDU) set that is not transmitted completely and successfully in case of determining that a terminal is in a cell change, where all or part of PDUs belonging to the target PDU set that is not transmitted completely and successfully are not transmitted or are not transmitted successfully; and
determining a transmission processing mode of the target PDU set.

In the target communication device of an embodiment of the present application, the transmission processing mode of the target PDU set includes:
transmitting, at a source base station, all PDUs belonging to the target PDU set completely, where the source base station is a base station which the terminal accesses before handover.

In the target communication device of an embodiment of the present application, the target PDU set is downlink data, and the target communication device is a source base station;
determining that the terminal is in the cell change includes:
determining to transmit a handover command to the terminal based on a measurement report of the terminal;
transmitting, at the source base station, all PDUs belonging to the target PDU set completely includes:
   transmitting all PDUs belonging to the target PDU set to the terminal before transmitting the handover command to the terminal.

In the target communication device of an embodiment of the present application, the target PDU set is uplink data, and the target communication device is a terminal;
determining that the terminal is in the cell change includes:
receiving a handover command transmitted from a source base station; and
determining, based on the handover command, to disconnect from the source base station and access a target base station, where the target base station is a base station which the terminal accesses after completing handover;
transmitting, at the source base station, all PDUs belonging to the target PDU set completely includes:
   transmitting all PDUs belonging to the target PDU set to the source base station before disconnecting from the source base station.

In the target communication device of an embodiment of the present application, a last uplink transmitted PDU of all PDUs belonging to the target PDU set includes an end marker, and the end marker is used for indicating that the PDU is the last PDU of all PDUs belonging to the target PDU set.

In the target communication device of an embodiment of the present application, the transmission processing mode of the target PDU set includes:
transmitting, at a target base station, all PDUs belonging to the target PDU set completely.

In the target communication device of an embodiment of the present application, the target PDU set is downlink data, and the target communication device is a source base station;
determining that the terminal is in the cell change includes:
determining to transmit a handover command to the terminal based on a measurement report of the terminal;
transmitting, at the target base station, all PDUs belonging to the target PDU set completely includes:
   transmitting all PDUs belonging to the target PDU set to the target base station in case of determining to transmit the handover command to the terminal.

In the target communication device of an embodiment of the present application, the target PDU set is downlink data, and the target communication device is a target base station;
determining that the terminal is in the cell change includes:
receiving a handover request transmitted from a source base station; and
transmitting handover request acknowledgement information to the source base station, where the handover request acknowledgement information is used for triggering the source base station to transmit a handover command to the terminal;
transmitting, at the target base station, all PDUs belonging to the target PDU set completely includes:
   receiving all PDUs belonging to the target PDU set transmitted from the source base station; and
   transmitting all PDUs belonging to the target PDU set to the terminal after the terminal completes handover.

In the target communication device of an embodiment of the present application, the target PDU set is uplink data, and the target communication device is a terminal;
determining that the terminal is in the cell change includes:
receiving a handover command transmitted from a source base station; and
determining, based on the handover command, to disconnect from the source base station and access a target base station;
transmitting, at the target base station, all PDUs belonging to the target PDU set completely includes:
   transmitting all PDUs belonging to the target PDU set to the target base station after the terminal completes handover and accesses the target base station.

In the target communication device of an embodiment of the present application, the transmission processing mode of the target PDU set includes:
transmitting a first data packet at a target base station, where the first data packet includes a PDU in the target PDU set that is not transmitted to a communication peer and/or a PDU that is not successfully transmitted to a communication peer.

In the target communication device of an embodiment of the present application, the target PDU set is downlink data, and the target communication device is a source base station;
determining that the terminal is in the cell change includes:
receiving a handover success message transmitted from the target base station after the source base station transmits a conditional handover configuration to the terminal;
transmitting the first data packet at the target base station includes:
   transmitting the first data packet to the target base station after the source base station receives the handover success message.

In the target communication device of an embodiment of the present application, the target PDU set is downlink data, and the target communication device is a target base station;
determining that the terminal is in the cell change includes:
transmitting a handover success message to a source base station after the terminal completes handover and accesses the target base station;
transmitting the first data packet at the target base station includes:
   receiving the first data packet transmitted from the source base station; and
   transmitting the first data packet to the terminal.

In the target communication device of an embodiment of the present application, the target PDU set is downlink data, and the target communication device is a source base station;
determining that the terminal is in the cell change includes:
determining to transmit a handover command to the terminal based on a measurement report of the terminal;
transmitting the first data packet at the target base station includes:
   transmitting the first data packet to the target base station in case of determining to transmit handover command to the terminal.

In the target communication device of an embodiment of the present application, the target PDU set is downlink data, and the target communication device is a target base station;
determining that the terminal is in the cell change includes:
receiving a handover request transmitted from a source base station; and
transmitting handover request acknowledgement information to the source base station, where the handover request acknowledgement information is used for triggering the source base station to transmit a handover command to the terminal;
transmitting the first data packet at the target base station includes:
   receiving the first data packet transmitted from the source base station; and
   transmitting the first data packet to the terminal after the terminal completes handover.

In the target communication device of an embodiment of the present application, the target PDU set is uplink data, and the target communication device is a terminal;
determining that the terminal is in the cell change includes:
receiving a handover command transmitted from a source base station; and
determining, based on the handover command, to disconnect from the source base station and access a target base station;
transmitting the first data packet at the target base station includes:
   transmitting the first data packet to the target base station after the terminal completes handover and accesses the target base station.

In the target communication device of an embodiment of the present application, the target PDU set is uplink data, and the target communication device is a terminal;
determining that the terminal is in the cell change includes:
determining that the terminal is in a conditional handover scenario based on a configuration of a target cell and a handover condition, and accessing the target base station in case that the handover condition is satisfied;
transmitting the first data packet at the target base station includes:
   transmitting the first data packet to the target base station after the terminal completes handover and accesses the target base station.

In the target communication device of an embodiment of the present application, the transmission processing mode of the target PDU set includes:
dropping a second data packet, where the second data packet is a PDU in the target PDU set that is not transmitted to a communication peer and/or a PDU that is not successfully transmitted to a communication peer.

In the target communication device of an embodiment of the present application, the target PDU set is downlink data, and the target communication device is a source base station;
determining that the terminal is in the cell change includes:
receiving a handover success message transmitted from the target base station after the source base station transmits a conditional handover configuration to the terminal;
dropping the second data packet includes:
   dropping the second data packet after the source base station receives the handover success message.

In the target communication device of an embodiment of the present application, the target PDU set is downlink data, and the target communication device is a source base station;
determining that the terminal is in the cell change includes:
determining to transmit a handover command to the terminal based on a measurement report of the terminal;
dropping the second data packet includes:
   dropping the second data packet in case of determining to transmit the handover command to the terminal.

In the target communication device of an embodiment of the present application, the target PDU set is uplink data, and the target communication device is a terminal;
determining that the terminal is in the cell change includes:
receiving a handover command transmitted from a source base station; and
determining, based on the handover command, to disconnect from the source base station and access a target base station;
dropping the second data packet includes:
   dropping the second data packet after receiving the handover command.

In the target communication device of an embodiment of the present application, the target PDU set is uplink data, and the target communication device is a terminal;
determining that the terminal is in the cell change includes:
determining that the terminal is in a conditional handover scenario based on a configuration of a target cell and a handover condition, and accessing the target base station in case that the handover condition is satisfied;
dropping the second data packet includes:
   dropping the second data packet in case of determining that the handover condition is satisfied.

In the target communication device of an embodiment of the present application, the target PDU set is uplink data, and the target communication device is a source base station or a target base station;
the operations further include:
transmitting an identifier of the target PDU set to the terminal, where the identifier is used for indicating the target PDU set using the transmission processing mode.

An embodiment of the present application further provides an apparatus for data transmission, including:
a first determining module, used for determining that there is a target protocol data unit (PDU) set that is not transmitted completely and successfully in case of determining that a terminal is in a cell change, where all or part of PDUs belonging to the target PDU set that is not transmitted completely and successfully are not transmitted or are not transmitted successfully; and
a second determining module, used for determining a transmission processing mode of the target PDU set.

An embodiment of the present application further provides a processor-readable storage medium having a computer program stored thereon, where the computer program is used to cause a processor to perform steps of the method for data transmission described above.

In the method and the apparatus for data transmission, the device and the storage medium provided by embodiments of the present application, it is determined that there is a PDU set that is not transmitted completely and successfully in case of determining that a terminal is in a cell change, and then the transmission processing mode of the target PDU set is determined, which ensures the transmission accuracy of the target PDU set and saves resources.

### BRIEF DESCRIPTION OF THE DRAWINGS

In order to illustrate solutions disclosed in embodiments of the present application or related art more clearly, the drawings used in the descriptions of the embodiments or related art will be briefly described below. The drawings in the following description are only certain embodiments of the present application, and other drawings may be obtained according to these drawings without any creative work for those skilled in the art.
FIG. 1 is a schematic diagram of a data packet in extended reality (XR) service modeling in the related art;
FIG. 2 is a schematic diagram of mapping an XR service data packet to multiple 5G system radio IP packets in the related art;
FIG. 3 is a schematic diagram of a traditional handover procedure performed by a terminal in the related art;
FIG. 4 is a schematic diagram of a conditional handover procedure performed by a terminal in the related art;
FIG. 5 is a schematic diagram of a method for data transmission according to an embodiment of the present application;
FIG. 6 is a schematic structural diagram of an apparatus for data transmission according to an embodiment of the present application;
FIG. 7 is a schematic structural diagram of a terminal according to an embodiment of the present application;
FIG. 8 is a schematic structural diagram of a source base station according to an embodiment of the present application; and
FIG. 9 is a schematic structural diagram of a target base station according to an embodiment of the present application.

### DETAILED DESCRIPTION

In embodiments of the present application, the term "and/or" describes the association relationship of the associated objects, indicating that there may be three relationships. For example, A and/or B may represent: A exists alone, A and B exist at the same time, and B exists alone. The character "j" generally indicates that the objects associated with each other are in an "or" relationship.

In the embodiments of the present application, the term "multiple" refers to two or more, and other quantifiers are similar.

Solutions in the embodiments of the present application will be described clearly and completely in conjunction with the drawings in the embodiments of the present application. The described embodiments are only part of the embodiments of the present application, not all of them. Based on the embodiments in the present application, all other embodiments obtained by those skilled in the art without creative work are within the scope of protection of the present application.

Embodiments of the present application provide a method and an apparatus for data transmission, a device and a storage medium, ensuring the transmission accuracy of the XR data frames and save resources.

The method and the apparatus are based on the same application concept. Since the principles of solving the problem by the method and the apparatus are similar, the implementation of the apparatus and the method may refer to each other, and the repetitions will not be repeated.

The solutions provided by the embodiments of the present application may be applied to a variety of systems, especially 5G systems. For example, applicable systems may include a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These systems include a terminal device and a network device. The system may further include a core network parts, such as an evolved packet system (EPS), a 5G system (5GS), etc.

The terminal device involved in the embodiments of the present application may be a device that provides voice and/or data connectivity to a user, a handheld device with a wireless connection function, or other processing devices connected to a wireless modem. In different systems, the names of terminal devices may also be different. For example, in a 5G system, the terminal device may be called a user equipment (UE). A wireless terminal device may communicate with one or more core networks (CN) via a radio access network (RAN). The wireless terminal device may be a mobile terminal device, such as a mobile phone (or a "cellular" phone) and a computer with a mobile terminal device. For example, it may be a portable, pocket-sized, handheld, computer-built-in or vehicle-mounted mobile device that exchanges language and/or data with a radio access network. For example, they may be personal communication service (PCS) phones, cordless phones, session initiation protocol (SIP) phones, wireless local loop (WLL) stations, personal digital assistants (PDAs), and other devices. The wireless terminal device may also be referred to as a system, a subscriber unit, a subscriber station, a mobile station, a mobile station, a remote station, an access point, a remote terminal device, an access terminal device, a user terminal device, a user agent, or a user device, which is not limited in the embodiments of the present application.

The network device involved in the embodiments of the present application may be a base station, which may include multiple cells providing services for the terminal. Depending on the specific application scenario, the base station may also be referred to as an access point, or may be a device in an access network that communicates with a wireless terminal device through one or more sectors on a radio interface, or other names. The network device may be used to interchange received air frames with Internet Protocol (IP) packets, and serve as a router between the wireless terminal device and the rest of the access network, where the rest of the access network may include an Internet Protocol (IP) communication network. The network device may also coordinate the attribute management of the radio interface. For example, the network device involved in the embodiments of the present application may be a base transceiver station (BTS) in the global system for mobile communications (GSM) or code division multiple access (CDMA), or a network device (node B) in wide-band code division multiple access (WCDMA), or an evolutional network device (eNB or e-NodeB) in the long term evolution (LTE) system, a 5G base station (gNB) in the 5G network architecture (next generation system), or a home evolved Node B (HeNB), a relay node, a home base station (femto), a pico base station (pico), etc., which is not limited in the embodiments of the present application. In some network structures, the network device may include a centralized unit (CU) node and a distributed unit (DU) node, and the centralized unit and the distributed unit may also be arranged geographically separately.

First, the following contents are introduced.

### 1. Extended reality (XR) services and their transmission characteristics

XR and cloud games (CG), as two of the most important 5G media applications, have requirements for low latency, high throughput and reliability. Massive data transmission is required in a short time, which means that its burst throughput may be much higher than the average throughput in a short time. For example, the burst throughput of an XR service with an average throughput of 100 Mbps in a short measurement window may reach 300 Mbps, and high reliability must be guaranteed at the same time. XR is a general term for different types of reality, referring to all real and virtual environments and human-computer interactions generated by computer technology and equipment. XR includes representative forms such as augmented reality (AR), mixed reality (MR) and virtual reality (VR).

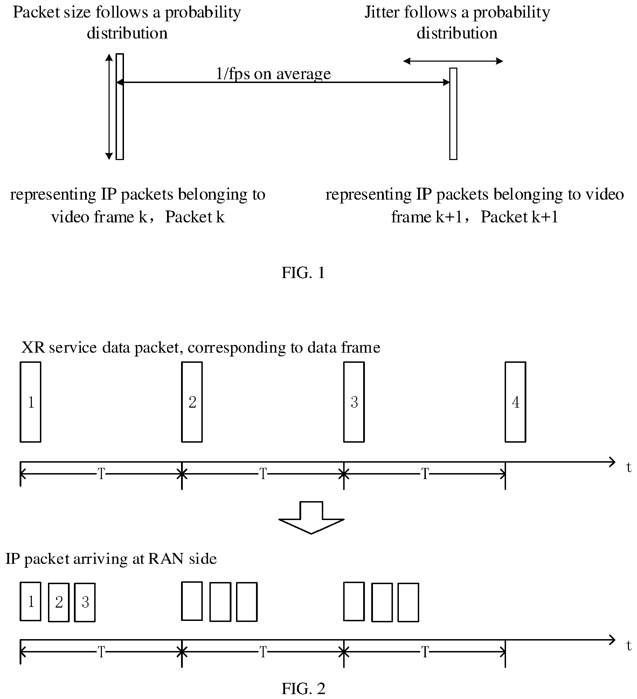

FIG. 1 is a schematic diagram of a data packet in XR service modeling in the related art. As shown in FIG. 1, the XR service is modeled as a frame-level data packet in the 5G system.

FIG. 2 is a schematic diagram of mapping an XR service data packet to multiple 5G system radio IP packets in the related art. As shown in FIG. 2, each data packet corresponds to an XR frame (also called a data frame), and the same data frame may be split into multiple IP packets. The data frame corresponds to a set of packet data units (PDU set), and each IP packet split from the same data frame corresponds to a packet data unit (PDU).

XR contains multiple data frames (PDU set), and each of the multiple data frames has its own transmission characteristics and transmission requirements. For example, intra-coded picture (I-frame) is intra-frame coding, which may represent the complete picture, and predicted picture (P-frame) is inter-frame coding, which only needs to carry different information from the previous frame. Therefore, I-frame has a large amount of data and high reliability requirements while P-frame has a small amount of data and low reliability requirements with respect to I-frame.

In XR services, service characteristic requirements are for data frames (PDU sets). For example, for scenes and video mixed streams, service characteristic requirements are: period being 60 fps (frame per second); data rate being 10 Mbps or 20 Mbps; packet delay budget (PDB) being 30 ms (mandatory) or 10 ms or 15 ms or 60 ms (optional).

Therefore, XR services are modeled based on data frames (PDU sets). A data frame (PDU set) may be split into multiple IP packets (PDUs), and radio transmission is performed by a basic unit of IP packets (PDUs). Among the multiple IP packets (PDUs) corresponding to a data frame (PDU set), the data frame (PDU set) may not be correctly decoded in case that one or several IP packets (PDUs) fail to be transmitted. Due to the large data flow of the data frame (PDU set), it takes more resources to transmit all subsequent IP packets (PDUs) correctly, which may cause transmission delays for subsequent data frames (PDU sets) of the same stream, or transmission delays for data frames (PDU sets) of other streams and therefore it is not conducive to satisfying the transmission delay requirements of XR services.

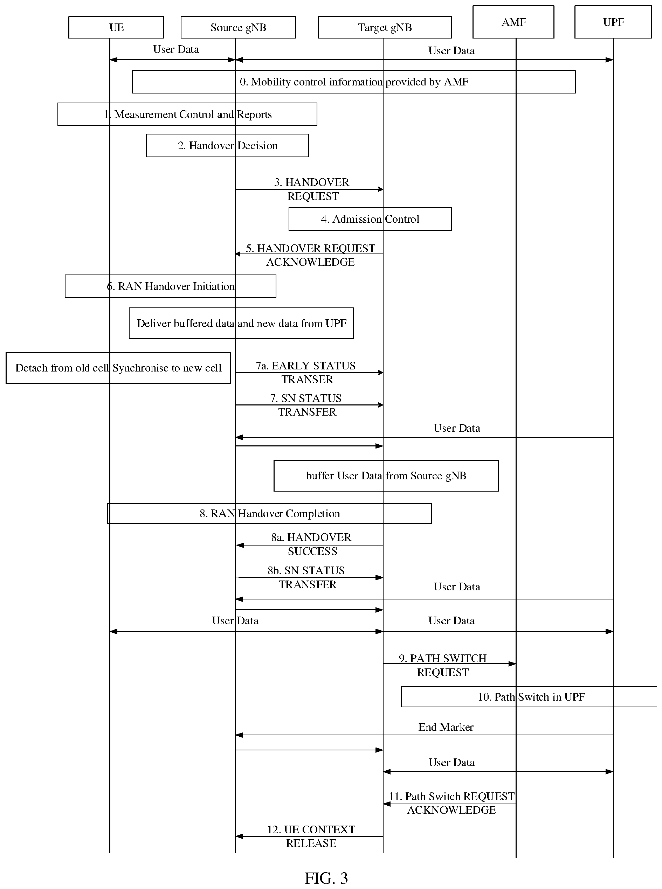

FIG. 3 is a schematic diagram of a traditional handover procedure performed by a terminal in the related art. As shown in FIG. 3, the terminal-related procedures mainly include step 1 in FIG. 3: handover measurement, step 6 in FIG. 3: a source cell initiates the handover, such as through the radio resource control (RRC) (RRC synchronous reconfiguration command), and step 8 in FIG. 3: handover to a target cell. In step 6 in FIG. 3, a source base station transmits an RRC reconfiguration message to a terminal, and the RRC reconfiguration message contains target cell information and the information of accessing the terminal into the target cell including random access parameters. Step 8 in FIG. 3 includes a random access procedure between the terminal and the target base station and a procedure during which the terminal transmits a RRC reconfiguration completion message corresponding to the RRC reconfiguration message indicating the handover from the source base station to the target base station.

After a source cell receives the RRC synchronous reconfiguration command and determines to hand over to the target cell (step 6 in FIG. 3), the terminal disconnects from the source cell and performs packet data convergence protocol (PDCP) reestablishment. For a data radio bearer (DRB) configured as a radio link control unacknowledgement mode (RLC UM), the PDCP reestablishment behavior performed by the terminal includes, for downlink data transmission, sorting the data packets PDCP PDU received from the source cell, and delivering the parsed PDCP SDU to the higher layer in ascending order of the corresponding count value. For uplink data transmission, the terminal will transmit data packet (i.e., the PDCP service data unit (SDU) or the data packet constructed as the PDCP PDU and not yet delivered to the lower layer) to the target cell in case that the above data packet has not yet delivered to the lower layer (i.e., the RLC layer) and will not retransmit the data packet that has been delivered to the lower layer (i.e., the data packet that has been assembled into the PDCP PDU and delivered to the lower layer) in the target cell regardless of whether it is successfully sent in the source cell.

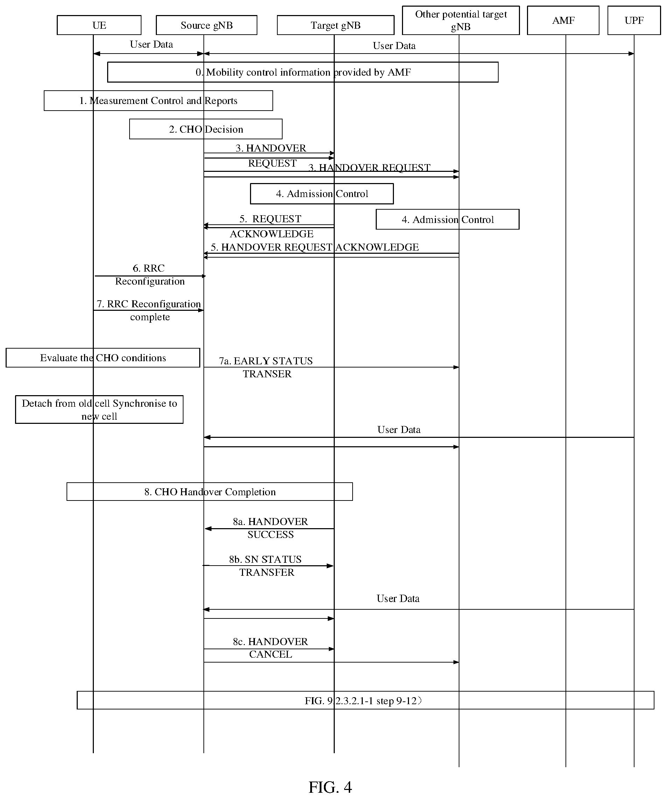

FIG. 4 is a schematic diagram of a conditional handover procedure performed by a terminal in the related art. As shown in FIG. 4, conditional handover (CHO) is a handover optimization method. In case that the handover condition is satisfied, the terminal performs the handover procedure by itself without receiving the handover command from the source base station. The source base station acknowledges that the terminal has completed the handover only after receiving the HANDOVER SUCCESS message from the target base station. Other procedures, including the user plane procedure, are the same as the traditional handover procedure.

The traditional handover procedure has the following two defects for XR data frame transmission. (1) During the handover procedure, different IP packets belonging to the same data frame may be partially transmitted at the source base station and partially transmitted at the target base station. A handover interruption delay occurs during the transmission between the source base station and the target base station, which increases the data frame transmission delay and may not satisfy the low delay requirement of XR data frame transmission. (2) RLC UM allows dropping of packets. For different IP packets belonging to the same data frame, in case that some IP packets are dropped in the source cell, the data frame cannot be correctly parsed even if the subsequent IP packets are successfully transmitted in the target cell, which actually causes a waste of radio resources in the target cell.

Therefore, embodiments of the present application provide a method and an apparatus for data transmission, a device and a storage medium.

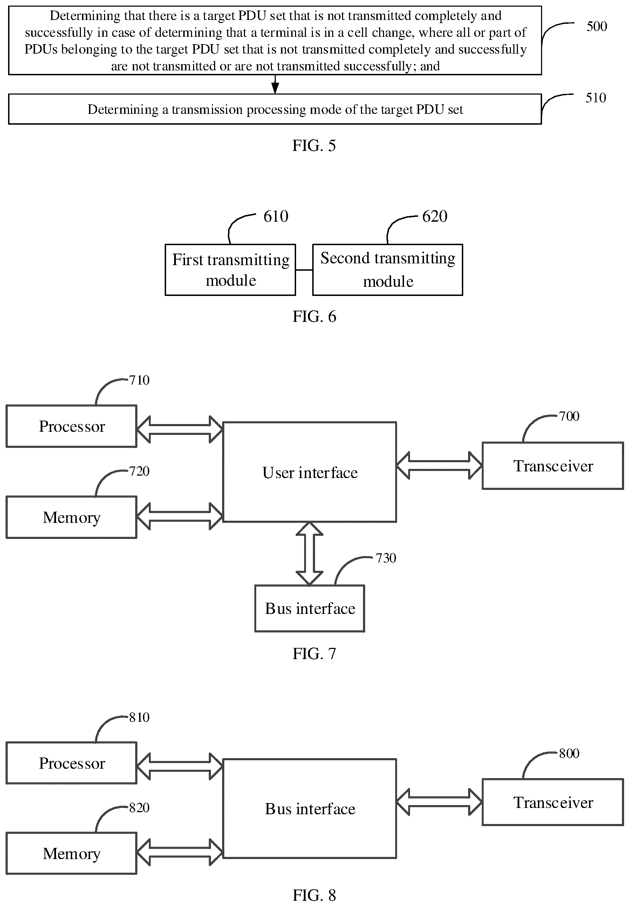

FIG. 5 is a schematic diagram of a method for data transmission according to an embodiment of the present application. As shown in FIG. 5, the method is performed by a target communication device, and the method may include step 500 and step 510.

Step 500: determining that there is a target protocol data unit (PDU) set that is not transmitted completely and successfully in case of determining that a terminal is in a cell change, where all or part of PDUs belonging to the target PDU set that is not transmitted completely and successfully are not transmitted or are not transmitted successfully.

Step 510: determining a transmission processing mode of the target PDU set.

In an embodiment, the target PDU set may be an XR data frame.

In an embodiment, the XR data frame may be split into a group of packet data unit sets PDU sets, and the IP packets to which the XR data frames belong correspond to packet data units (PDU) in the radio network. That is, the XR data frame corresponds to the PDU set, and the IP packet corresponds to the PDU.

In an embodiment, when the terminal changes a cell, the handover is performed in case that the PDU set is not transmitted completely, which causes that all or part of the PDU are not transmitted or not successfully transmitted. Therefore, in case of determining that the terminal is in a cell change, it may be determined that there is a target PDU set that is not transmitted completely and successfully.

In an embodiment, after it is determined that there is a target PDU set that is not transmitted fully and successfully as above, the transmission processing mode of the target PDU set may be determined, and the target PDU set may be transmitted based on a suitable transmission processing mode to ensure the transmission accuracy of the target PDU set.

In an embodiment, the transmission processing mode of the target PDU set may be determined based on the transmission performance requirements of the target PDU set.

For example, in case that the transmission performance requirement of the target PDU set is low latency, the transmission processing mode of the target PDU set may be determined to be a mode that may ensure low latency.

For another example, in case that the transmission performance requirement of the target PDU set is high reliability, the transmission processing mode of the target PDU set may be determined to be a mode that may ensure high reliability.

In the embodiment of the present application, by determining a suitable transmission processing mode of the target PDU set that is not transmitted completely, it may be ensured that the transmission performance requirements of the target PDU set are satisfied, the transmission accuracy of the target PDU set is improved, and transmission resources is saved.

In the method for data transmission provided by the embodiment of the present application, it is determined that there is a PDU set that is not transmitted completely and successfully in case of determining that a terminal is in a cell change, and then the transmission processing mode of the target PDU set is determined, which ensures the transmission accuracy of the target PDU set and saves resources.

In an embodiment, the transmission processing mode of the target PDU set includes:
transmitting, at a source base station, all PDUs belonging to the target PDU set completely.

In an embodiment, the transmission processing mode of the target PDU set may be determined to include: transmitting, at the source base station, all PDUs belonging to the target PDU set, where the source base station is a base station which the terminal accesses before handover.

In an embodiment, the transmission processing mode of the target PDU set may be determined to include: transmitting, at the source base station, all PDUs belonging to the target PDU set successfully.

In an embodiment, the transmission processing mode of the target PDU set may be determined to include: transmitting, at the source base station, all PDUs belonging to the target PDU set.

In an embodiment, transmitting, at a source base station, all PDUs belonging to the target PDU set completely may refer to transmitting, at the source base station, all PDUs belonging to the target PDU set successfully.

In an embodiment, transmitting, at a source base station, all PDUs belonging to the target PDU set completely may mean that the target PDU set belongs are transmitted successfully before the terminal performs the handover.

In an embodiment, transmitting, at a source base station, all PDUs belonging to the target PDU set completely may mean that all PDUs belonging to the target PDU set are transmitted successfully before the terminal performs the handover.

In an embodiment, the method further includes: performing the transmission processing mode of the target PDU set, that is, the method further includes: transmitting, at a source base station, all PDUs belonging to the target PDU set completely.

In an embodiment, in case that the transmission performance requirement of the target PDU set is high reliability and/or low latency, in order to ensure that the transmission of PDUs in the target PDU set will not fail or be interrupted due to the terminal performing the handover, or in order to ensure that PDUs belonging to the same PDU set will not be lost since they are transmitted by different base stations after the terminal performs the handover, etc., in case of determining that the terminal is in a cell change, the terminal handover procedure may not be performed first, but all PDUs belonging to the target PDU set may be successfully transmitted first, then the terminal handover procedure may be performed, and low latency may also be guaranteed.

In the embodiment of the present application, the PDUs belonging to the same target PDU set (such as an XR data frame) may be transmitted on the same base station to ensure high reliability transmission of the target PDU set, and the accuracy of successful transmission is effectively improved.

In an embodiment, the target PDU set is downlink data, and the target communication device is the source base station;
determining that the terminal is in the cell change includes:
determining to transmit a handover command to the terminal based on a measurement report of the terminal;
transmitting, at the source base station, all PDUs belonging to the target PDU set completely includes:
   transmitting all PDUs belonging to the target PDU set to the terminal before transmitting the handover command to the terminal.

In an embodiment, in case that the target PDU set is downlink data, a transmitter of the downlink data is a source base station; in order to transmit all PDUs belonging to the target PDU set at the source base station, the source base station may determine that the terminal is in a cell change based on the measurement report of the terminal, that is, in case that it is needed to transmit a handover command to the terminal, the source base station may transmit all PDUs belonging to the target PDU set to the terminal first, and then transmit a handover command to the terminal for indicating the terminal to perform handover after all PDUs belonging to the target PDU set are successfully transmitted.

In an embodiment, in case that the target PDU set is downlink data, the transmitter of the downlink data is the source base station, and the target PDU set being an XR data frame is taken as an example. The source base station may first transmit all PDUs (which may be called a PDU set) belonging to the same XR data frame that have arrived at the source base station to the terminal, and then transmit a handover command to the terminal in case of receiving the measurement report of the terminal and determining that a terminal handover procedure is initiated based on the measurement report of the terminal.

In an embodiment, the PDU on the RAN side may be equivalent to a service data adaptation protocol (SDAP) service data unit (SDU).

In an embodiment, in case that the target PDU set is downlink data, the transmitter of the downlink data is the source base station. The terminal may perform measurement reporting based on the measurement configuration of the source base station. The source base station may first transmit all PDUs belonging to the same XR data frame that have arrived at the source base station to the terminal, and then transmit a handover command to the terminal in case of receiving the measurement report of the terminal and determining that a terminal handover procedure is initiated based on the measurement report of the terminal. The terminal may perform the handover procedure after receiving the handover command from the source base station.

In an embodiment, by completing the transmission of all to-be-transmitted data frames before performing the terminal handover procedure in a scenario where the terminal is determined to be in handover, the reliability of data frame transmission may be guaranteed to the greatest extent for XR services with a requirement for low latency.

In an embodiment, the target PDU set is uplink data, and the target communication device is a terminal;
determining that the terminal is in the cell change includes:
receiving a handover command transmitted from a source base station; and
determining, based on the handover command, to disconnect from the source base station and access a target base station, where the target base station is a base station which the terminal accesses after completing handover;
transmitting, at the source base station, all PDUs belonging to the target PDU set completely includes:
   transmitting all PDUs belonging to the target PDU set to the source base station before disconnecting from the source base station.

In an embodiment, in case that the target PDU set is uplink data, the transmitter of the uplink data is the terminal. In order to transmit all PDUs belonging to the target PDU set at the source base station, after receiving the handover command transmitted from the source base station and determining based on the handover command that it needs to disconnect from the source base station and access the target base station, the terminal may first transmit all PDUs belonging to the target PDU set to the source base station. After all PDUs belonging to the target PDU set are transmitted, the terminal disconnects from the source base station and accesses the target base station to complete the handover.

In an embodiment, in case that the target PDU set is uplink data, the transmitter of the uplink data is the terminal.

In an embodiment, in case that the target PDU set is uplink data, the transmitter of the uplink data is the terminal, and the target PDU set as an XR data frame is taken as an example. After the terminal receives the handover command transmitted from the source base station based on the measurement report of the terminal, in case that the PDUs belonging to the same XR data frame (which is called a PDU set) have started to be transmitted on the radio interface, the terminal may transmit all the PDUs of the PDU set to the source base station, and then perform the handover procedure, disconnect from the source base station, and access the target base station.

In an embodiment, the PDU on the RAN side may be equivalent to the SDAP SDU.

In an embodiment, by completing the transmission of all to-be-transmitted data frames before performing the terminal handover procedure in a scenario where the terminal is determined to be in handover, the reliability of data frame transmission may be guaranteed to the greatest extent for XR services with a requirement for low latency.

In an embodiment, a last uplink transmitted PDU of all PDUs belonging to the target PDU set includes an end marker, and the end marker is used for indicating that the PDU is the last PDU of all PDUs belonging to the target PDU set.

In an embodiment, since the transmission of all target PDU sets to be transmitted is completed before performing the terminal handover procedure in the scenario where the terminal is determined to be in the handover, in order to ensure that the communication peer may start the terminal handover procedure in time after all the transmissions of the target PDU sets to be transmitted are completed, the end marker may be carried in the last transmitted PDU belonging to the target PDU set to inform the communication peer that, all PDUs belonging to the to-be-transmitted target PDU set up to until the PDU where the end marker is located have been transmitted.

In an embodiment, since the transmission of all target PDU sets to be transmitted is completed before performing the terminal handover procedure in the scenario where the terminal is determined to be in the handover, in order to ensure that the source base station may start the terminal handover procedure in time after all the transmissions of the target PDU sets to be transmitted are completed, the terminal may carry the end marker in the last transmitted PDU belonging to the target PDU set to inform the source base station that, all PDUs belonging to the to-be-transmitted target PDU set up to until the PDU where the end marker is located have been transmitted.

In an embodiment, in case that the target PDU set is uplink data, the transmitter of the uplink data is the terminal. The terminal may perform measurement reporting based on the measurement configuration of the source base station. The source base station may receive the measurement report of the terminal and decide to initiate the terminal handover procedure based on the measurement report of the terminal, and then transmit a handover command to the terminal. After the terminal receives the handover command from the source base station, in case that the PDU belonging to the same XR data frame has begun to be transmitted on the radio interface, the terminal may not temporarily perform the handover procedure, but transmit all PDUs belonging to the PDU set to the source base station first, and disconnect from the source base station after all to-be-transmitted XR data frames are successfully transmitted.

In an embodiment, the terminal may carry an end marker in the last uplink transmission transmitted to the source base station, and the end marker is carried in a packet data convergence protocol (PDCP) PDU or the SDAP PDU.

The source base station may also continue to receive the uplink transmission transmitted from the terminal after transmitting the handover command to the terminal, and may disconnect the transmission from the terminal only after determining that the uplink data transmission of the terminal is terminated.

The source base station determines that the uplink data transmission of the terminal is terminated under the following conditions. After transmitting the handover command, the source base station receives the uplink data from the terminal, and starts or restarts an "uplink data transmission termination change timer" and considers the uplink transmission of the terminal to be terminated after the timer expires. The duration of the timer is predefined by the benchmark or configured by the core network based on the service characteristics. Alternatively, the source base station receives the "handover success message" transmitted from the target base station to the source base station; or, the uplink transmission transmitted from the terminal includes an end marker, which is carried in the PDCP PDU or SDAP PDU.

In an embodiment, after the terminal accesses the target base station, the target base station transmits a "handover success message" to the source base station.

The base station may pre-configure the terminal to perform the PDU set transmission at the source base station, and a data radio bearer (DRB) ID or quality of service (QoS) flow ID of the handover procedure is transmitted.

In an embodiment, the transmission processing mode of the target PDU set includes:
transmitting, at a target base station, all PDUs belonging to the target PDU set completely.

In an embodiment, the transmission processing mode of the target PDU set may be determined to include: transmitting, at a target base station, all PDUs belonging to the target PDU set completely.

In an embodiment, the transmission processing mode of the target PDU set may be determined to include: transmitting, at a target base station, all PDUs belonging to the target PDU set.

In an embodiment, the transmission processing mode of the target PDU set may be determined to include: transmitting, at a target base station, all PDUs belonging to the target PDU set successfully.

In an embodiment, transmitting, at a target base station, all PDUs belonging to the target PDU set completely may refer to that all PDUs belonging to the target PDU set are transmitted successfully at the target base station.

In an embodiment, transmitting, at a target base station, all PDUs belonging to the target PDU set may refer to transmitting the target PDU set completely in case of determining that the terminal is to perform a handover, that is, transmitting all PDUs belonging to the target PDU set completely after an action of "determining" that the terminal is to perform a handover, or after the terminal performs a handover.

In an embodiment, the method further includes: the transmission processing mode of the target PDU set; that is, the method further includes: transmitting, at the target base station, all PDUs belonging to the target PDU set completely.

In an embodiment, in case that the transmission performance requirement of the target PDU set is high reliability, in order to ensure that the transmission of PDUs in the target PDU set will not fail or be interrupted due to the terminal performing the handover, or in order to ensure that the PDUs belonging to the same PDU set will not be lost since they are transmitted by different base stations after the terminal performs the handover, etc., in case of determining that the terminal is in a cell change and the terminal is to perform a handover, all PDUs belonging to the target PDU set are transmitted at the target base station.

In the embodiment of the present application, the PDUs belonging to the same target PDU set (such as XR data frames) may be transmitted at the same base station to ensure high reliability transmission of the target PDU set, the accuracy of successful transmission is effectively improved.

In an embodiment, the target PDU set is downlink data, and the target communication device is the source base station;
determining that the terminal is in the cell change includes:
determining to transmit a handover command to the terminal based on a measurement report of the terminal;
transmitting, at the target base station, all PDUs belonging to the target PDU set completely includes:
   transmitting all PDUs belonging to the target PDU set to the target base station in case of determining to transmit the handover command to the terminal.

In an embodiment, in case that the target PDU set is downlink data, the transmitter of the downlink data is the source base station. In order to transmit all PDUs belonging to the target PDU set at the target base station, the source base station may transmit all PDUs belonging to the target PDU set to the target base station when it is determined based on the measurement report of the terminal that the terminal is in a cell change, that is, it is necessary to transmit a handover command to the terminal. After receiving all PDUs belonging to the target PDU set, the target base station transmits all PDUs belonging to the target PDU set to the terminal to complete the downlink transmission.

In an embodiment, in case that the target PDU set is downlink data, the transmitter of the downlink data is the source base station, and the target PDU set as an XR data frame is taken as an example. The source base station may receive the measurement report of the terminal and determine to initiate the terminal handover procedure based on the measurement report of the terminal. In case that the PDUs belonging to the same data frame (which is called a PDU set) are not all transmitted to the terminal, the source base station may forward all PDUs belonging to the PDU set to the target base station (that is, forward the SDAP SDU containing the PDU to the target base station) and the target base station transmits all PDUs belonging to the PDU set to the terminal.

In an embodiment, the target PDU set is downlink data, and the target communication device is a target base station;
determining that the terminal is in the cell change includes:
receiving a handover request transmitted from a source base station; and
transmitting handover request acknowledgement information to the source base station, where the handover request acknowledgement information is used for triggering the source base station to transmit a handover command to the terminal;
transmitting, at the target base station, all PDUs belonging to the target PDU set completely includes:
   receiving all PDUs belonging to the target PDU set transmitted from the source base station; and
   transmitting all PDUs belonging to the target PDU set to the terminal after the terminal completes handover.

In an embodiment, in case that the target PDU set is downlink data, the transmitter of the downlink data is the source base station. In order to transmit all PDUs belonging to the target PDU set at the target base station, the source base station may transmit a handover request to the target base station when it is determined that the terminal is in a cell change based on the measurement report of the terminal. After receiving the handover request, the target base station may transmit a handover request acknowledgement message to the source base station, triggering the source base station to transmit a handover command to the terminal. The source base station may transmit all PDUs belonging to the target PDU set to the target base station, the target base station may receive all PDUs transmitted from the source base station, and after the terminal completes handover based on the handover command, the target base station transmits all PDUs belonging to the target PDU set to the terminal, and the downlink transmission of the target PDU set is completed.

In an embodiment, in case that the target PDU set is downlink data, the transmitter of the downlink data is the source base station, and the target PDU set as an XR data frame is taken as an example. The source base station may transmit a handover request to the target base station when it is determined that the terminal is in a cell change based on the measurement report of the terminal. After receiving the handover request, the target base station may transmit a handover request acknowledgement message to the source base station, triggering the source base station to transmit a handover command to the terminal. In case that the PDUs belonging to the same data frame (which is called a PDU set) are not all transmitted to the terminal, the source base station may forward all the PDUs belonging to the PDU set to the target base station (that is, forward the SDAP SDU containing the PDU to the target base station), and the target base station may receive all the PDUs transmitted from the source base station, and after the terminal completes handover, the target base station transmits all the PDUs belonging to the target PDU set to the terminal to complete the downlink transmission.

In an embodiment, the target PDU set is uplink data, and the target communication device is a terminal;
determining that the terminal is in the cell change includes:
receiving a handover command transmitted from a source base station; and
determining, based on the handover command, to disconnect from the source base station and access a target base station;
transmitting, at the target base station, all PDUs belonging to the target PDU set completely includes:
   transmitting all PDUs belonging to the target PDU set to the target base station after the terminal completes handover and accesses the target base station.

In an embodiment, in case that the target PDU set is uplink data, the transmitter of the uplink data is the terminal. In order to transmit all PDUs belonging to the target PDU set at the target base station, the terminal may perform handover after receiving the handover command transmitted from the source base station. In case that there are PDUs belonging to the same target PDU set (which is called a PDU set) that are not all transmitted to the source base station, the terminal transmits all PDUs belonging to the PDU set to the target base station after completing the handover.

In an embodiment, in case that the target PDU set is uplink data, the transmitter of the uplink data is the terminal; the source base station transmits a handover command to the terminal when it is determined that the terminal may be handed over to the target base station for performing the handover procedure.

After receiving the handover command from the source base station, in case that the PDUs belonging to the same target PDU set (which is called a PDU set) are not all transmitted to the source base station, the terminal may transmit all the PDUs belonging to the PDU set to the target base station after completing the handover.

The target base station may perform the handover procedure for the terminal, and receive the uplink data transmitted from the terminal after the handover is completed.

The base station may pre-configure the DRB ID or QoS flow ID that may perform the PDU retransmission operation for the terminal.

In an embodiment, the transmission processing mode of the target PDU set includes:
transmitting a first data packet at a target base station, where the first data packet includes a PDU in the target PDU set that is not transmitted to a communication peer and/or a PDU that is not successfully transmitted to a communication peer.

In an embodiment, in case that the target communication device is the source base station, the communication peer of the source base station is the terminal.

In an embodiment, in case that the target communication device is the target base station, the communication peer of the target base station is the terminal.

In an embodiment, in case that the target communication device is the terminal, the communication peer of the terminal before the handover is the source base station.

In an embodiment, the PDU in the target PDU set that is not transmitted to a communication peer and/or the PDU that is not successfully transmitted to a communication peer may refer to: a PDU in the target PDU set that is not transmitted to the communication peer and/or the PDU that is not successfully transmitted to the communication peer before the terminal is handed over.

In an embodiment, the method further includes: performing the transmission processing mode of the target PDU set, that is, the method further includes: transmitting a first data packet at the target base station. The first data packet includes a PDU in the target PDU set that is not transmitted to a communication peer and/or a PDU that is not successfully transmitted to a communication peer.

In an embodiment, the transmission processing mode of the target PDU set may be determined to include: transmitting a first data packet at the target base station;
the first data packet may include any one or more of the following:
a PDU in the target PDU set that is not transmitted to a communication peer; or
a PDU that is not successfully transmitted to a communication peer.

In an embodiment, in case that the transmission performance requirement of the target PDU set is high reliability, in order to ensure that there is the first data packet in the target PDU set due to the terminal handover, that is, there is the PDU that is not transmitted to the communication peer and/or the PDU that is not successfully transmitted to the communication peer in the target PDU set. The first data packet may be transmitted at the target base station to ensure the transmission accuracy of the first data packet.

In the embodiment of the present application, in case that there is a transmission error of part of the PDU at the source base station, the transmitter may retransmit the PDU with the transmission error at the target base station, and the transmission accuracy of the first data packet is improved and resources are saved since all PDUs do not need to be retransmitted.

In an embodiment, the target PDU set is downlink data, and the target communication device is a source base station;
determining that the terminal is in the cell change includes:
receiving a handover success message transmitted from the target base station after the source base station transmits a conditional handover configuration to the terminal;
transmitting the first data packet at the target base station includes:
   transmitting the first data packet to the target base station after the source base station receives the handover success message.

In an embodiment, in case that the target PDU set is downlink data, the transmitter of the downlink data is the source base station; in order to transmit the first data packet at the target base station, the source base station may determine that the terminal is in a cell change after transmitting the conditional handover configuration to the terminal and receiving the handover success message transmitted from the target base station, and then transmit the first data packet to the target base station. The target base station transmits the first data packet to the terminal after receiving the first data packet, which ensures that all PDUs in the target PDU set are successfully transmitted.

In an embodiment, in case that the target PDU set is downlink data, the transmitter of the downlink data is the source base station. The source base station may receive the handover success message transmitted from the target base station (conditional cell change): in case of determining that PDUs of a PDU set are not all transmitted to the terminal, and some PDUs are not successfully transmitted (which is determined based on that the base station does not receive the hybrid automatic repeat request (HARQ) feedback from the terminal after transmitting a medium access control address (MAC) PDU containing the PDU to the terminal), then the source base station forwards the SDAP SDU containing the above two types of PDUs that are not successfully transmitted to the target base station, and the target base station transmits the SDAP SDU to the terminal.

In an embodiment, the target PDU set is downlink data, and the target communication device is a target base station;
determining that the terminal is in the cell change includes:
transmitting a handover success message to a source base station after the terminal completes handover and accesses the target base station;
transmitting the first data packet at the target base station includes:
   receiving the first data packet transmitted from the source base station; and
   transmitting the first data packet to the terminal.

In an embodiment, in case that the target PDU set is downlink data, the transmitter of the downlink data is the source base station. In order to transmit the first data packet at the target base station, the target base station may transmit a handover success message to the source base station after the terminal satisfies the handover condition and the handover is successful. The source base station may determine that the terminal is in a cell change when receiving the handover success message transmitted from the target base station, and then transmit the first data packet to the target base station. After receiving the first data packet, the target base station may transmit the first data packet to the terminal, which ensures that all PDUs in the target PDU set are successfully transmitted.

In an embodiment, in case that the target PDU set is downlink data, the transmitter of the downlink data is the source base station, and the target PDU set as an XR data frame is taken as an example. The source base station may transmit a configuration of a target cell and a handover condition to the terminal, and the terminal receives the conditional handover configuration from the source base station, including configuration of a target cell and the triggering condition of the conditional handover; the terminal may initiate a handover procedure to the target base station after the triggering condition of the conditional handover is satisfied, and the target base station transmits a handover success message to the source base station after determining that the terminal handover is completed. The source base station may determine that the terminal is in a cell change after receiving the handover success message transmitted from the target base station, and in case that all PDUs of a PDU set among all the data to be transmitted from the source base station are not transmitted to the terminal, and some PDUs are not transmitted successfully (which is determined based on that the base station does not receive the HARQ feedback from the terminal after transmitting a MAC PDU containing the PDU to the terminal), then the source base station forwards the SDAP SDU (first data packet) containing the above two types of PDUs that have not been successfully transmitted to the target base station, and after receiving the first data packet, the target base station may transmit the first data packet to the terminal.

In an embodiment, the target PDU set is downlink data, and the target communication device is a source base station;
determining that the terminal is in the cell change includes:
determining to transmit a handover command to the terminal based on a measurement report of the terminal;
transmitting the first data packet at the target base station includes:
   transmitting the first data packet to the target base station in case of determining to transmit the handover command to the terminal.

In an embodiment, in case that the target PDU set is downlink data, the transmitter of the downlink data is the source base station. In order to transmit the first data packet at the target base station, the source base station may determine that the terminal is in a cell change in case of determining to transmit a handover command to the terminal based on the measurement report of the terminal, and then transmit the first data packet to the target base station. After receiving the first data packet, the target base station transmits the first data packet to the terminal, which ensures that all PDUs in the target PDU set are successfully transmitted.

In an embodiment, in case that the target PDU set is downlink data, the transmitter of the downlink data is the source base station; the source base station may determine to transmit a handover command to the terminal based on the measurement report of the terminal (conventional cell change). In case that it is determined that PDUs of a PDU set are not all transmitted to the terminal, and some PDUs are not transmitted successfully (which is determined based on that the base station does not receive the HARQ feedback from the terminal after transmitting a MAC PDU containing the PDU to the terminal), the source base station may forward the SDAP SDU containing the above two types of PDUs that have not been successfully transmitted to the target base station, and the target base station may transmit it to the terminal.

In an embodiment, the target PDU set is downlink data, and the target communication device is the target base station;
determining that the terminal is in the cell change includes:
receiving a handover request transmitted from a source base station; and
transmitting handover request acknowledgement information to the source base station, where the handover request acknowledgement information is used for triggering the source base station to transmit a handover command to the terminal;
transmitting the first data packet at the target base station includes:
   receiving the first data packet transmitted from the source base station; and
   transmitting the first data packet to the terminal after the terminal completes handover.

In an embodiment, in case that the target PDU set is downlink data, the transmitter of the downlink data is the source base station. In order to transmit the first data packet at the target base station, the source base station may determine that the terminal is in a cell change in case of determining to transmit a handover command to the terminal based on the measurement report of the terminal, and then the source base station may transmit the first data packet to the target base station. After receiving the first data packet, the target base station may transmit the first data packet to the terminal, which ensures that all PDUs in the target PDU set are successfully transmitted.

In an embodiment, in case that the target PDU set is downlink data, the transmitter of the downlink data is the source base station, and the target PDU set as an XR data frame is taken as an example. The terminal may perform measurement reporting based on the measurement configuration of the source base station. The source base station may determine that the terminal is in a cell change in case of receiving the measurement report of the terminal and determining to initiate the terminal handover procedure based on the measurement report of the terminal, that is, determining to transmit a handover command to the terminal. Among all the data to be transmitted from the source base station, in case that PDUs of a PDU set are not all transmitted to the terminal, and some PDUs are not successfully transmitted (which is determined based on that the base station does not receive the HARQ feedback from the terminal after transmitting a MAC PDU containing the PDU to the terminal), the source base station forwards the SDAP SDU (first data packet) containing the above two types of PDUs that have not been successfully transmitted to the target base station, and the target base station may receive the first data packet and transmit the first data packet to the terminal after the terminal is handed over to the target base station based on the handover command. After receiving the first data packet, the terminal may correctly parse the target PDU set based on the first data packet and the PDU received from the source base station before the handover.

In an embodiment, the target PDU set is uplink data, and the target communication device is a terminal;
determining that the terminal is in the cell change includes:
receiving a handover command transmitted from a source base station; and
determining, based on the handover command, to disconnect from the source base station and access a target base station;
transmitting the first data packet at the target base station includes:
   transmitting the first data packet to the target base station after the terminal completes handover and accesses the target base station.

In an embodiment, in case that the target PDU set is uplink data, the transmitter of the uplink data is the terminal. In order to transmit the first data packet at the target base station, the terminal may perform handover after receiving the handover command transmitted from the source base station. In case that PDUs of a PDU set are not all transmitted to the terminal, and some PDUs are not successfully transmitted (which is determined based on that the terminal does not receive the HARQ feedback from the base station after transmitting a MAC PDU containing the PDU to the base station), after completing the handover, the terminal may retransmit the SDAP SDU containing the above two types of PDUs (first data packets) that have not been successfully transmitted to the target base station.

In an embodiment, in case that the target PDU set is uplink data, the transmitter of the uplink data is the terminal. The source base station transmits a handover command to the terminal for performing the handover procedure in case of determining that the terminal may be handed over to the target base station.

After receiving the handover command from the source base station, in case that PDUs of a PDU set are not all transmitted to the source base station, and some PDUs are not successfully transmitted (which is determined based on that the terminal does not receive the HARQ feedback from the base station after transmitting a MAC PDU containing the PDU to the base station), the terminal then retransmits the SDAP SDU containing the PDU that was not successfully transmitted to the target base station after completing the handover.

The target base station may perform the handover procedure for the terminal, and receive the first data packet transmitted from the terminal after the handover is completed.

The base station may pre-configure the DRB ID or QoS flow ID that may perform the PDU retransmission operation for the terminal.

In an embodiment, the target PDU set is uplink data, and the target communication device is a terminal;
determining that the terminal is in the cell change includes:
determining that the terminal is in a conditional handover scenario based on a configuration of a target cell and a handover condition, and accessing the target base station in case that the handover condition is satisfied;
transmitting the first data packet at the target base station includes:
   transmitting the first data packet to the target base station after the terminal completes handover and accesses the target base station.

In an embodiment, in case that the target PDU set is uplink data, the transmitter of the uplink data is the terminal. In order to transmit the first data packet at the target base station, the terminal may determine that the terminal is in a conditional handover scenario based on the configuration of a target cell and the handover condition, and access the target base station when the handover condition is satisfied. In case that PDUs of a PDU set are not all transmitted to the source base station, and some PDUs are not successfully transmitted (which is determined based on that the terminal does not receive the HARQ feedback from the base station after transmitting a MAC PDU containing the PDU to the base station), the terminal then retransmits the SDAP SDU containing the PDU that was not successfully transmitted (first data packets) to the target base station after completing the handover.

In an embodiment, in case that the target PDU set is uplink data, the transmitter of the uplink data is the terminal, and the target PDU set as an XR data frame is taken as an example. The source base station may transmit a configuration of a target cell and the handover condition to the terminal, and the terminal receives the conditional handover configuration from the source base station, including configuration of a target cell and the triggering condition of the conditional handover; the terminal may initiate a handover procedure to the target base station after the triggering condition of the conditional handover is satisfied. In case that PDUs of a PDU set are not all transmitted to the source base station, and some PDUs are not successfully transmitted (which is determined based on that the terminal does not receive the HARQ feedback from the base station after transmitting a MAC PDU containing the PDU to the base station), the terminal then retransmits the SDAP SDU containing the PDU that was not successfully transmitted to the target base station after completing the handover.

The target base station may perform a handover procedure for the terminal, and receive the first data packet transmitted from the terminal after the handover is completed.

The base station may pre-configure the DRB ID or QoS flow ID that may perform the PDU retransmission operation for the terminal.

In an embodiment, the transmission processing mode of the target PDU set includes:
dropping a second data packet, where the second data packet is a PDU in the target PDU set that is not transmitted to a communication peer and/or a PDU that is not successfully transmitted to a communication peer.

In an embodiment, the transmission processing mode of the target PDU set may be determined, including: dropping a second data packet, where the second data packet is a PDU in the target PDU set that is not transmitted to a communication peer and/or a PDU that is not successfully transmitted to a communication peer.

In an embodiment, the first data packet may include any one or more of the following:
a PDU in the target PDU set that is not transmitted to a communication peer; or
a PDU that is not successfully transmitted to a communication peer.

In an embodiment, the method further includes: performing the transmission processing mode of the target PDU set, that is, the method further includes: dropping the second data packet, where the second data packet is a PDU in the target PDU set that is not transmitted to the communication peer and/or a PDU that is not successfully transmitted to the communication peer.

In an embodiment, in case that the transmission performance requirement of the target PDU set is low latency and a transmission error occurs in some PDUs at the transmitter, the transmitter may drop remaining PDUs and/or erroneous PDUs, and no longer continue to transmit or retransmit the erroneous PDUs.

In the embodiment of the present application, for XR services with high latency requirements, radio interface resource overhead may be saved in case that some PDUs are dropped.

The embodiment of the present application is applicable to services with high latency requirements, and unnecessary radio interface data transmission may be dropped to save radio interface resources in case of determining that the XR data frame cannot be successfully transmitted.

In an embodiment, the target PDU set is downlink data, and the target communication device is a source base station;
determining that the terminal is in the cell change includes:
receiving a handover success message transmitted from the target base station after the source base station transmits a conditional handover configuration to the terminal;
dropping the second data packet includes:
   dropping the second data packet after the source base station receives the handover success message.

In an embodiment, in case that the target PDU set is downlink data, the transmitter of the downlink data is the source base station; before dropping the second data packet, the target base station may transmit a handover success message to the source base station after the terminal satisfies the handover condition and the handover is successful. The source base station may determine that the terminal is in a cell change in case of receiving the handover success message transmitted from the target base station, and then drop the second data packet and not forward it to the target base station.

The embodiment of the present application is suitable for services with high latency requirements. Unnecessary radio interface data transmission may be dropped to save radio interface resources in case of determining that the XR data frame cannot be successfully transmitted.

In an embodiment, in case that the target PDU set is downlink data, the transmitter of the downlink data is the source base station, and the target PDU set as an XR data frame is taken as an example. The source base station may transmit a configuration of a target cell and handover condition to the terminal, and the terminal receives the conditional handover configuration from the source base station, including configuration of a target cell and the triggering condition of the conditional handover; the terminal may initiate a handover procedure to the target base station after the triggering condition of the conditional handover is satisfied, and the target base station transmits a handover success message to the source base station after determining that the terminal handover is completed. The source base station may determine that the terminal is in a cell change after receiving the handover success message transmitted from the target base station, and in case that all PDUs of a PDU set are not transmitted to the terminal, and some PDUs are not transmitted successfully among all the data to be transmitted from the source base station (which is determined based on that the base station does not receive the HARQ feedback from the terminal after transmitting the MAC PDU containing the PDU to the terminal), the source base station then drops the other PDUs belonging to the PDU set (i.e., the second data packet) and does not forward it to the target base station.

In an embodiment, the target PDU set is downlink data, and the target communication device is a source base station;
determining that the terminal is in the cell change includes:
determining to transmit a handover command to the terminal based on a measurement report of the terminal;
dropping the second data packet includes:
   dropping the second data packet in case of determining to transmit the handover command to the terminal.

In an embodiment, in case that the target PDU set is downlink data, the transmitter of the downlink data is the source base station; before dropping the second data packet, the source base station may drop the second data packet when determining to transmit a handover command to the terminal based on the measurement report of the terminal.

In an embodiment, in case that the target PDU set is downlink data, the transmitter of the downlink data is the source base station. The source base station may determine to transmit a handover command to the terminal based on the measurement report of the terminal (conventional cell change). In case of determining that PDUs of a PDU set are not all transmitted to the terminal, and some PDUs are not transmitted successfully (which is determined based on that the base station does not receive the HARQ feedback for the terminal after transmitting the MAC PDU containing the PDU to the terminal), the source base station may drop the PDU containing the above two types of unsuccessful transmissions and may not forward them to the target base station.

The embodiment of the present application is suitable for services with high latency requirements. Unnecessary radio interface data transmission may be dropped to save radio interface resources in case of determining that the XR data frame cannot be successfully transmitted.

In an embodiment, the target PDU set is uplink data, and the target communication device is a terminal;
determining that the terminal is in the cell change includes:
receiving a handover command transmitted from a source base station; and
determining, based on the handover command, to disconnect from the source base station and access a target base station;
dropping the second data packet includes:
   dropping the second data packet after receiving the handover command.

In an embodiment, in case that the target PDU set is uplink data, and the transmitter of the uplink data is the terminal. In order to transmit the first data packet at the target base station, the terminal may perform handover after receiving the handover command transmitted from the source base station. In case that PDUs of a PDU set are not all transmitted to the source base station and some PDUs are not successfully transmitted (which is determined based on that the terminal does not receive the HARQ feedback from the base station after transmitting the MAC PDU containing the PDU to the base station), the terminal drops the other PDUs belonging to the PDU set and does not transmit them to the target base station while initiating the handover.

In an embodiment, in case that the target PDU set is uplink data, the transmitter of the uplink data is the terminal. The source base station transmits a handover command to the terminal in case of determining that the terminal may be handed over to the target base station for performing the handover procedure.

After receiving the handover command from the source base station, in case that PDUs of a PDU set are not all transmitted to the source base station, and some PDUs are not successfully transmitted (which is determined based on that the terminal does not receive the HARQ feedback from the base station after transmitting the MAC PDU containing the PDU to the base station), the terminal then drops the other PDUs belonging to the PDU set and does not transmit them to the target base station when initiating the handover.

It should be noted that: the base station may pre-configure the DRB ID or QoS flow ID that may perform the PDU drop operation for the terminal.

In an embodiment, the target PDU set is uplink data, and the target communication device is a terminal;
determining that the terminal is in the cell change includes:
determining that the terminal is in a conditional handover scenario based on a configuration of a target cell and a handover condition, and accessing the target base station in case that the handover condition is satisfied;
dropping the second data packet includes:
   dropping the second data packet in case of determining that the handover condition is satisfied.

In an embodiment, in case that the target PDU set is uplink data, the transmitter of the uplink data is the terminal. In order to transmit the first data packet at the target base station, the terminal may determine that the terminal is in a conditional handover scenario based on a configuration of a target cell and a handover condition, and access the target base station when the handover condition is satisfied. In case that PDUs of a PDU set are not all transmitted to the source base station, and some PDUs are not successfully transmitted (which is determined based on that the terminal does not receive the HARQ feedback from the base station after transmitting the MAC PDU containing the PDU to the base station), the terminal then drops the other PDUs belonging to the PDU set and does not transmit them to the target base station when initiating the handover.

In an embodiment, in case that the target PDU set is uplink data, the transmitter of the uplink data is the terminal, and the target PDU set as an XR data frame is taken as an example. The source base station may transmit a configuration of a target cell and a handover condition to the terminal, and the terminal receives the conditional handover configuration from the source base station, including configuration of a target cell and the triggering condition of the conditional handover; the terminal may initiate a handover procedure to the target base station after the triggering condition of the conditional handover is satisfied. In case that PDUs belonging to a PDU set are not all transmitted to the source base station, and some PDUs are not transmitted successfully (which is determined based on that the terminal does not receive the HARQ feedback from the base station after transmitting a MAC PDU containing the PDU to the base station), the terminal then drops the other PDUs belonging to the PDU set and does not transmit them to the target base station when initiating the handover.

The base station may pre-configure the DRB ID or QoS flow ID that may perform the PDU drop operation for the terminal.

In an embodiment, the target PDU set is uplink data, and the target communication device is a source base station or a target base station;
the method further includes:
transmitting an identifier of the target PDU set to the terminal, where the identifier is used for indicating the target PDU set using the transmission processing mode.

In an embodiment, the source base station or the target base station may indicate in advance that the target PDU set may be retransmitted by using the identifier (such as DRB ID or QoS flow ID) of the target PDU set.

In an embodiment, the source base station or the target base station may indicate that the target PDU set may be dropped by using the identifier (such as DRB ID or QoS flow ID) of the target PDU set in advance.

In the method for data transmission provided by the embodiment of the present application, it is determined that there is a PDU set that is not transmitted completely and successfully in case of determining that a terminal is in a cell change, and then the transmission processing mode of the target PDU set is determined, which ensures the transmission accuracy of the target PDU set and saves resources.

The method for data transmission provided in the embodiment of the present application may be performed by an apparatus for data transmission. In the embodiment of the present application, the apparatus for data transmission provided in the embodiment of the present application is described by taking the method for data transmission performed by the apparatus for data transmission as an example.

FIG. 6 is a schematic structural diagram of an apparatus for data transmission according to an embodiment of the present application. As shown in FIG. 6, the apparatus for data transmission may include a first determining module 610 and a second determining module 620.

The first determining module 610 is used for determining that there is a target PDU set that is not transmitted completely and successfully in case of determining that a terminal is in a cell change, where all or part of PDUs belonging to the target PDU set that is not transmitted completely and successfully are not transmitted or are not transmitted successfully.

The second determining module 620 is used for determining a transmission processing mode of the target PDU set.

In the apparatus for data transmission provided by the embodiment of the present application, it is determined that there is a PDU set that is not transmitted completely and successfully in case of determining that a terminal is in a cell change, and then the transmission processing mode of the target PDU set is determined, which ensures the transmission accuracy of the target PDU set and saves resources.

In an embodiment, the apparatus for data transmission further includes:
a first performing module, used for performing the transmission processing mode of the target PDU set, and the first performing module is used for:
transmitting, at a source base station, all PDUs belonging to the target PDU set completely, where the source base station is a base station which the terminal accesses before handover.

In an embodiment, the target PDU set is downlink data, and a target communication device is a source base station;
the first determining module 610 is used for determining to transmit a handover command to the terminal based on a measurement report of the terminal;
the first performing module is used for transmitting all PDUs belonging to the target PDU set to the terminal before transmitting the handover command to the terminal.

In an embodiment, the target PDU set is uplink data, and the target communication device is a terminal;
the first determining module 610 is used for:
receiving a handover command transmitted from a source base station; and
determining, based on the handover command, to disconnect from the source base station and access a target base station, where the target base station is a base station which the terminal accesses after completing handover;
the first performing module is used for transmitting all PDUs belonging to the target PDU set to the source base station before disconnecting from the source base station.

In an embodiment, a last uplink transmitted PDU of all PDUs belonging to the target PDU set includes an end marker, and the end marker is used for indicating that the PDU is the last PDU of all PDUs belonging to the target PDU set.

In an embodiment, the apparatus for data transmission further includes:
a second performing module, used for performing the transmission processing mode of the target PDU set, the second performing module is used for transmitting, at a target base station, all PDUs belonging to the target PDU set completely.

In an embodiment, the target PDU set is downlink data, and a target communication device is a source base station;
the first determining module 610 is used for determining to transmit a handover command to the terminal based on a measurement report of the terminal; and
the second performing module is used for transmitting all PDUs belonging to the target PDU set to the target base station in case of determining to transmit the handover command to the terminal.

In an embodiment, the target PDU set is downlink data, and the target communication device is the target base station;
the first determining module 610 is used for:
receiving a handover request transmitted from a source base station; and
transmitting handover request acknowledgement information to the source base station, where the handover request acknowledgement information is used for triggering the source base station to transmit a handover command to the terminal;
the second performing module is used for:
   receiving all PDUs belonging to the target PDU set transmitted from the source base station; and
   transmitting all PDUs belonging to the target PDU set to the terminal after the terminal completes handover.

In an embodiment, the target PDU set is uplink data, and a target communication device is a terminal;
the first determining module 610 is used for:
receiving a handover command transmitted from a source base station; and
determining, based on the handover command, to disconnect from the source base station and access a target base station;
the second performing module is used for:
   transmitting all PDUs belonging to the target PDU set to the target base station after the terminal completes handover and accesses the target base station.

In an embodiment, the apparatus for data transmission further includes:
a third performing module, used for performing the transmission processing mode of the target PDU set, and the third performing module is used for:
transmitting a first data packet at a target base station, where the first data packet includes a PDU in the target PDU set that is not transmitted to a communication peer and/or a PDU that is not successfully transmitted to a communication peer.

In an embodiment, the target PDU set is downlink data, and the target communication device is a source base station;
the first determining module 610 is used for:
receiving a handover success message transmitted from the target base station after the source base station transmits a conditional handover configuration to the terminal;
the third performing module is used for:
   transmitting the first data packet to the target base station after the source base station receives the handover success message.

In an embodiment, the target PDU set is downlink data, and the target communication device is a target base station;
the first determining module 610 is used for:
transmitting a handover success message to a source base station after the terminal completes handover and accesses the target base station;
the third performing module is used for:
   receiving the first data packet transmitted from the source base station; and
   transmitting the first data packet to the terminal.

In an embodiment, the target PDU set is downlink data, and the target communication device is a source base station;
the first determining module 610 is used for:
determining to transmit a handover command to the terminal based on a measurement report of the terminal;
the third performing module is used for:
   transmitting the first data packet to the target base station in case of determining to transmit the handover command to the terminal.

In an embodiment, the target PDU set is downlink data, and the target communication device is a target base station;
the first determining module 610 is used for:
receiving a handover request transmitted from a source base station; and
transmitting handover request acknowledgement information to the source base station, where the handover request acknowledgement information is used for triggering the source base station to transmit a handover command to the terminal;
the third performing module is used for:
   receiving the first data packet transmitted from the source base station; and
   transmitting the first data packet to the terminal after the terminal completes handover.

In an embodiment, the target PDU set is uplink data, and the target communication device is a terminal;
the first determining module 610 is used for:
receiving a handover command transmitted from a source base station; and
determining, based on the handover command, to disconnect from the source base station and access a target base station;
the third performing module is used for:
   transmitting the first data packet to the target base station after the terminal completes handover and accesses the target base station.

In an embodiment, the target PDU set is uplink data, and the target communication device is a terminal;
the first determining module 610 is used for:
determining that the terminal is in a conditional handover scenario based on a configuration of a target cell and a handover condition, and accessing the target base station in case that the handover condition is satisfied;
the third performing module is used for:
   transmitting the first data packet to the target base station after the terminal completes handover and accesses the target base station.

In an embodiment, the apparatus for data transmission further includes:
a fourth performing module, used for performing the transmission processing mode of the target PDU set, and the fourth performing module is used for:
dropping a second data packet, where the second data packet is a PDU in the target PDU set that is not transmitted to a communication peer and/or a PDU that is not successfully transmitted to a communication peer.

In an embodiment, the target PDU set is downlink data, and the target communication device is a source base station;
the first determining module 610 is used for:
receiving a handover success message transmitted from the target base station after the source base station transmits a conditional handover configuration to the terminal;
the fourth performing module is used for:
   dropping the second data packet after the source base station receives the handover success message.

In an embodiment, the target PDU set is downlink data, and the target communication device is a source base station;
the first determining module 610 is used for:
determining to transmit a handover command to the terminal based on a measurement report of the terminal;
the fourth performing module is used for:
   dropping the second data packet in case of determining to transmit the handover command to the terminal.

In an embodiment, the target PDU set is uplink data, and a target communication device is a terminal;
the first determining module 610 is used for:
receiving a handover command transmitted from a source base station; and
determining, based on the handover command, to disconnect from the source base station and access a target base station;
the fourth performing module is used for:
   dropping the second data packet after receiving the handover command.

In an embodiment, the target PDU set is uplink data, and a target communication device is a terminal;
the first determining module 610 is used for:
determining that the terminal is in a conditional handover scenario based on a configuration of a target cell and a handover condition, and accessing the target base station in case that the handover condition is satisfied;
the fourth performing module is used for:
   dropping the second data packet in case of determining that the handover condition is satisfied.

In an embodiment, the target PDU set is uplink data, and the target communication device is a source base station or a target base station;
the apparatus further includes:
a first transmitting module, used for transmitting an identifier of the target PDU set to the terminal, where the identifier is used for indicating the target PDU set using the transmission processing mode.

It should be noted that the division of units in the embodiments of the present application is schematic, which is only a logical function division, and there may be other division methods in actual implementation. In addition, each functional unit in each embodiment of the present application may be integrated into a processing unit, or each unit may exist physically separately, or two or more units may be integrated into one unit. The above-mentioned integrated unit may be implemented in the form of hardware or in the form of a software functional unit.

In case that the integrated unit is implemented in the form of a software functional unit and sold or used as an independent product, it may be stored in a processor-readable storage medium. The solution of the present application, in essence, or the part that contributes to the related art, or all or part of the solution may be embodied in the form of a software product, which is stored in a storage medium and includes several instructions for a computer device (which may be a personal computer, server, or network device, etc.) or a processor to execute all or part of the steps of the method described in each embodiment of the present application. The aforementioned storage medium includes: a flash disk, a mobile hard disk, read-only memory (ROM), random access memory (RAM), disk or a compact disk, etc., which may store program code.

It should be noted here that the above-mentioned apparatus provided in the embodiment of the present invention may perform all the method steps implemented in the above-mentioned method embodiment, and may have the same technical effect. The parts and beneficial effects of the embodiment that are the same as the method embodiment will not be described in detail here.

In an embodiment, the target communication device may be a terminal.

FIG. 7 is a schematic structural diagram of a terminal according to an embodiment of the present application. As shown in FIG. 7, the terminal includes a memory 720, a transceiver 700 and a processor 710.

The memory 720 is used for storing a computer program; the transceiver 700 is used for transmitting and receiving data under control of the processor 710; the processor 710 is used for reading the computer program in the memory 720 and performing the following operations:
determining that there is a target PDU set that is not transmitted completely and successfully in case of determining that a terminal is in a cell change, where all or part of PDUs belonging to the target PDU set that is not transmitted completely and successfully are not transmitted or are not transmitted successfully; and
determining a transmission processing mode of the target PDU set.

The transceiver 700 is used for receiving and transmitting data under control of the processor 710.

In FIG. 7, a bus architecture may include any number of interconnected buses and bridges, which are linked together through various circuits of one or more processors represented by the processor 710 and one or more memories represented by the memory 720. The bus architecture may also link together various other circuits, such as peripherals, voltage regulators, and power management circuits. These are well known in the art and therefore will not be described further in the present application. The bus interface provides an interface. The transceiver 700 may be multiple elements, i.e., including a transmitter and a receiver, units for providing communication with various other devices over transmission media including wireless channels, wired channels, fiber optic cables, and the like. For different user equipment, a user interface 730 may be an interface capable of externally or internally connecting the required equipment, and the connected equipment includes, but not limited to, a keypad, a display, a speaker, a microphone, a joystick, and the like.

The processor 710 is responsible for managing the bus architecture and general processing, and the memory 720 may store data used by the processor 710 when performing operations.

In some embodiments, the processor 710 may be a central processing unit (CPU), an application specific integrated circuit (ASIC), a field-programmable gate array (FPGA), or a complex programmable logic device (CPLD), and the processor may also use a multi-core architecture.

The processor is configured for performing any of the methods provided by the embodiments of the present application according to the obtained executable instructions by calling the computer program stored in the memory. The processor and the memory may also be physically separated.

In an embodiment, the processor 710 is further used for performing the transmission processing mode of the target PDU set, and the processor 710 is further used for:
transmitting, at a source base station, all PDUs belonging to the target PDU set completely.

In an embodiment, the target PDU set is uplink data, and the target communication device is a terminal;
the processor 710 is used for:
receiving a handover command transmitted from a source base station; and
determining, based on the handover command, to disconnect from the source base station and access a target base station, where the target base station is a base station which the terminal accesses after completing the handover;
the processor 710 is further used for:
   transmitting all PDUs belonging to the target PDU set to the source base station before disconnecting from the source base station.

In an embodiment, a last uplink transmitted PDU of all PDUs belonging to the target PDU set includes an end marker, and the end marker is used for indicating that the PDU is the last PDU of all PDUs belonging to the target PDU set.

In an embodiment, the processor 710 is further used for performing the transmission processing mode of the target PDU set, and the processor 710 is further used for:
transmitting, at a target base station, all PDUs belonging to the target PDU set completely.

In an embodiment, the target PDU set is uplink data, and a target communication device is a terminal;
the processor 710 is used for:
receiving a handover command transmitted from a source base station; and
determining, based on the handover command, to disconnect from the source base station and access a target base station;
the processor 710 is further used for:
   transmitting all PDUs belonging to the target PDU set to the target base station after the terminal completes handover and accesses the target base station.

In an embodiment, the processor 710 is further used for performing the transmission processing mode of the target PDU set, and the processor 710 is further used for:
transmitting a first data packet at a target base station, where the first data packet includes a PDU in the target PDU set that is not transmitted to a communication peer and/or a PDU that is not successfully transmitted to a communication peer.

In an embodiment, the target PDU set is uplink data, and a target communication device is a terminal;
the processor 710 is used for:
receiving a handover command transmitted from a source base station; and
determining, based on the handover command, to disconnect from the source base station and access a target base station;
the processor 710 is further used for:
   transmitting the first data packet to the target base station after the terminal completes handover and accesses the target base station.

In an embodiment, the target PDU set is uplink data, and the target communication device is a terminal;
the processor 710 is used for:
determining that the terminal is in a conditional handover scenario based on a configuration of a target cell and a handover condition, and accessing the target base station in case that the handover condition is satisfied;
the processor 710 is further used for:
   transmitting the first data packet to the target base station after the terminal completes handover and accesses the target base station.

In an embodiment, the processor 710 is further used for performing the transmission processing mode of the target PDU set, and the processor 710 is further used for:
dropping a second data packet, where the second data packet is a PDU in the target PDU set that is not transmitted to a communication peer and/or a PDU that is not successfully transmitted to a communication peer.

In an embodiment, the target PDU set is uplink data, and the target communication device is a terminal;
the processor 710 is used for:
receiving a handover command transmitted from a source base station; and
determining, based on the handover command, to disconnect from the source base station and access a target base station;
the processor 710 is further used for:
   dropping the second data packet after receiving the handover command.

In an embodiment, the target PDU set is uplink data, and the target communication device is a terminal;
the processor 710 is used for:
determining that the terminal is in a conditional handover scenario based on a configuration of a target cell and a handover condition, and accessing the target base station in case that the handover condition is satisfied;
the processor 710 is further used for:
   dropping the second data packet in case of determining that the handover condition is satisfied.

It should be noted that the above-mentioned terminal provided in the embodiment of the present invention may perform all the method steps implemented in the method embodiment performed by the terminal, and may have the same technical effect. The parts and beneficial effects that are the same as the method embodiment in this embodiment will not be specifically repeated here.

In an embodiment, the target communication device may be a source base station.

FIG. 8 is a schematic structural diagram of a source base station according to an embodiment of the present application. As shown in FIG. 8, the source base station includes a memory 820, a transceiver 800 and a processor 810.

The memory 820 is used for storing a computer program; the transceiver 800 is used for transmitting and receiving data under control of the processor 810; the processor 810 is used for reading the computer program in the memory 820 and performing the following operations:
determining that there is a target PDU set that is not transmitted completely and successfully in case of determining that a terminal is in a cell change, where all or part of PDUs belonging to the target PDU set that is not transmitted completely and successfully are not transmitted or are not transmitted successfully; and
determining a transmission processing mode of the target PDU set.

The transceiver 800 is used for receiving and transmitting data under control of the processor 810.

In FIG. 8, a bus architecture may include any number of interconnected buses and bridges, which are linked together through various circuits of one or more processors represented by the processor 810 and one or more memories represented by the memory 820. The bus architecture may also link together various other circuits, such as peripherals, voltage regulators, and power management circuits. These are well known in the art and therefore will not be described further in the present application. The bus interface provides an interface. The transceiver 800 may be multiple elements, i.e., including a transmitter and a receiver, units for providing communication with various other devices over transmission media including wireless channels, wired channels, fiber optic cables, and the like. The processor 810 is responsible for managing the bus architecture and general processing, and the memory 820 may store data used when performing operations.

The processor 810 may be a central processing unit (CPU), an application specific integrated circuit (ASIC), a field-programmable gate array (FPGA), or a complex programmable logic device (CPLD), and the processor may also use a multi-core architecture.

In an embodiment, the processor 810 is further used for performing the transmission processing mode of the target PDU set, and the processor 810 is further used for:
transmitting, at a source base station, all PDUs belonging to the target PDU set completely, where the source base station is a base station which the terminal accesses before handover.

In an embodiment, the target PDU set is downlink data, and the target communication device is the source base station;
the processor 810 is used for:
determining to transmit a handover command to the terminal based on a measurement report of the terminal;
the processor 810 is further used for:
   transmitting all PDUs belonging to the target PDU set to the terminal before transmitting the handover command to the terminal.

In an embodiment, the processor 810 is further used for performing the transmission processing mode of the target PDU set, and the transmission processing mode of the target PDU set includes:
transmitting, at a target base station, all PDUs belonging to the target PDU set completely.

In an embodiment, the target PDU set is downlink data, and a target communication device is a source base station;
the processor 810 is used for
determining to transmit a handover command to the terminal based on a measurement report of the terminal;
the processor 810 is further used for:
   transmitting all PDUs belonging to the target PDU set to the target base station in case of determining to transmit the handover command to the terminal.

In an embodiment, the processor 810 is further used for performing the transmission processing mode of the target PDU set, and the processor 810 is further used for:
transmitting a first data packet at a target base station, where the first data packet includes a PDU in the target PDU set that is not transmitted to a communication peer and/or a PDU that is not successfully transmitted to a communication peer.

In an embodiment, the target PDU set is downlink data, and the target communication device is a source base station;
the processor 810 is used for:
receiving a handover success message transmitted from the target base station after the source base station transmits a conditional handover configuration to the terminal;
the processor 810 is further used for:
   transmitting the first data packet to the target base station after the source base station receives the handover success message.

In an embodiment, the target PDU set is downlink data, and a target communication device is a source base station;
the processor 810 is used for:
determining to transmit a handover command to the terminal based on a measurement report of the terminal;
the processor 810 is further used for:
   transmitting the first data packet to the target base station in case of determining to transmit the handover command to the terminal.

In an embodiment, the processor 810 is further used for performing the transmission processing mode of the target PDU set. The processor 810 is further used for:
dropping a second data packet, where the second data packet is a PDU in the target PDU set that is not transmitted to a communication peer and/or a PDU that is not successfully transmitted to a communication peer.

In an embodiment, the target PDU set is downlink data, and the target communication device is a source base station;
the processor 810 is used for:
receiving a handover success message transmitted from the target base station after the source base station transmits a conditional handover configuration to the terminal;
the processor 810 is further used for:
   dropping the second data packet after the source base station receives the handover success message.

In an embodiment, the target PDU set is downlink data, and the target communication device is a source base station;
the processor 810 is used for:
determining to transmit a handover command to the terminal based on a measurement report of the terminal;
the processor 810 is further used for:
   dropping the second data packet in case of determining to transmit the handover command to the terminal.

In an embodiment, the target PDU set is uplink data, and the target communication device is a source base station;
the processor 810 is further used for:
transmitting an identifier of the target PDU set to the terminal, where the identifier is used for indicating the target PDU set using the transmission processing mode.

It should be noted that the above-mentioned source base station provided in the embodiment of the present application may perform all the method steps implemented by the method embodiment performed by the source base station, and may have the same technical effect. The parts and beneficial effects of the embodiment that are the same as the method embodiment will not be described in detail here.

In an embodiment, the target communication device may be a target base station.

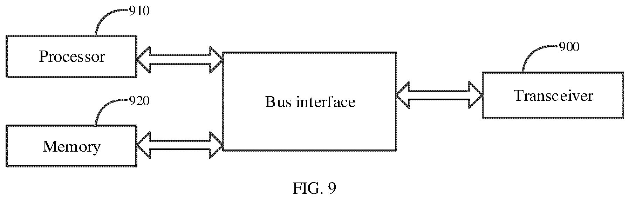

FIG. 9 is a schematic structural diagram of a target base station according to an embodiment of the present application. As shown in FIG. 9, the target base station includes a memory 920, a transceiver 900 and a processor 910.

The memory 920 is used for storing a computer program; the transceiver 900 is used for transmitting and receiving data under control of the processor 910; and the processor 910 is used for reading the computer program in the memory 920 and performing the following operations:
determining that there is a target PDU set that is not transmitted completely and successfully in case of determining that a terminal is in a cell change, where all or part of PDUs belonging to the target PDU set that is not transmitted completely and successfully are not transmitted or are not transmitted successfully; and
determining a transmission processing mode of the target PDU set.

The transceiver 900 is used for receiving and transmitting data under control of the processor 910.

In FIG. 9, a bus architecture may include any number of interconnected buses and bridges, which are linked together through various circuits of one or more processors represented by the processor 910 and one or more memories represented by the memory 920. The bus architecture may also link together various other circuits, such as peripherals, voltage regulators, and power management circuits. These are well known in the art and therefore will not be described further in the present application. The bus interface provides an interface. The transceiver 900 may be multiple elements, i.e., including a transmitter and a receiver, units for providing communication with various other devices over transmission media including wireless channels, wired channels, fiber optic cables, and the like. The processor 910 is responsible for managing the bus architecture and general processing, and the memory 920 may store data used when performing operations.

In some embodiments, the processor 910 may be a central processing unit (CPU), an application specific integrated circuit (ASIC), a field-programmable gate array (FPGA), or a complex programmable logic device (CPLD), and the processor may also use a multi-core architecture.

In an embodiment, the processor 910 is further used for performing the transmission processing mode of the target PDU set, and the processor 910 is further used for:
transmitting, at a target base station, all PDUs belonging to the target PDU set completely.

In an embodiment, the target PDU set is downlink data, and the target communication device is a target base station;
the processor 910 is used for:
receiving a handover request transmitted from a source base station; and
transmitting handover request acknowledgement information to the source base station, where the handover request acknowledgement information is used for triggering the source base station to transmit a handover command to the terminal;
the processor 910 is further used for:
   receiving all PDUs belonging to the target PDU set transmitted from the source base station; and
   transmitting all PDUs belonging to the target PDU set to the terminal after the terminal completes handover.

In an embodiment, the processor 910 is further used for performing the transmission processing mode of the target PDU set, and the processor 910 is further used for:
transmitting a first data packet at a target base station, where the first data packet includes a PDU in the target PDU set that is not transmitted to a communication peer and/or a PDU that is not successfully transmitted to a communication peer.

In an embodiment, the target PDU set is downlink data, and the target communication device is a target base station;
the processor 910 is used for:
transmitting a handover success message to a source base station after the terminal completes handover and accesses the target base station;
the processor 910 is further used for:
   receiving the first data packet transmitted from the source base station; and
   transmitting the first data packet to the terminal.

In an embodiment, the target PDU set is downlink data, and the target communication device is a target base station;
the processor 910 is used for:
receiving a handover request transmitted from a source base station; and
transmitting handover request acknowledgement information to the source base station, where the handover request acknowledgement information is used for triggering the source base station to transmit a handover command to the terminal;
the processor 910 is further used for:
   receiving the first data packet transmitted from the source base station; and
   transmitting the first data packet to the terminal after the terminal completes handover.

In an embodiment, the target PDU set is uplink data, and the target communication device is a target base station;
the processor 910 is further used for:
transmitting an identifier of the target PDU set to the terminal, where the identifier is used for indicating the target PDU set using the transmission processing mode.

It should be noted that the target base station provided in the embodiment of the present application may perform all the method steps implemented in the method embodiment performed by the target base station, and may have the same technical effect. The parts and beneficial effects of the embodiment in the present application that are the same as those of the method embodiment will not be described in detail here.

The embodiment of the present application further provides a processor-readable storage medium storing a computer program, and the computer program is used to cause a processor to perform the methods according to the above embodiments, including:
determining that there is a target PDU set that is not transmitted completely and successfully in case of determining that a terminal is in a cell change, where all or part of PDUs belonging to the target PDU set that is not transmitted completely and successfully are not transmitted or are not transmitted successfully; and
determining a transmission processing mode of the target PDU set.

The processor-readable storage medium may be any available medium or data storage device that may be accessed by the computer, including but not limited to, a magnetic storage (e.g., a floppy disk, a hard disk, a magnetic tape, a magneto-a compact disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for data transmission, applied to a target communication device, comprising:
determining that there is a target protocol data unit, PDU, set that is not transmitted completely and successfully in case of determining that a terminal is in a cell change, wherein all or part of PDUs belonging to the target PDU set that is not transmitted completely and successfully are not transmitted or are not transmitted successfully; and
determining a transmission processing mode of the target PDU set.

2. The method of claim 1, wherein the transmission processing mode of the target PDU set comprises:
transmitting, at a source base station, all PDUs belonging to the target PDU set completely, the source base station being a base station which the terminal accesses before handover.

3. The method of any one of claim 1 or 2, wherein the target PDU set is downlink data, and the target communication device is a source base station;
determining that the terminal is in the cell change comprises:
determining to transmit a handover command to the terminal based on a measurement report of the terminal;
transmitting, at the source base station, all PDUs belonging to the target PDU set completely comprises:
transmitting all PDUs belonging to the target PDU set to the terminal before transmitting the handover command to the terminal.

4. The method of any one of claim 1 or 2, wherein the target PDU set is uplink data, and the target communication device is a terminal;
determining that the terminal is in the cell change comprises:
receiving a handover command transmitted from a source base station; and
determining, based on the handover command, to disconnect from the source base station and access a target base station, wherein the target base station is a base station which the terminal accesses after completing handover;
transmitting, at the source base station, all PDUs belonging to the target PDU set completely comprises:
transmitting all PDUs belonging to the target PDU set to the source base station before disconnecting from the source base station.

5. The method of claim 4, wherein a last uplink transmitted PDU of all PDUs belonging to the target PDU set comprises an end marker, and the end marker is used for indicating that the PDU is the last PDU of all PDUs belonging to the target PDU set.

6. The method of claim 1, wherein the transmission processing mode of the target PDU set comprises:
transmitting, at a target base station, all PDUs belonging to the target PDU set completely.

7. The method of any one of claims 1 to 6, wherein the target PDU set is downlink data, and the target communication device is a source base station;
determining that the terminal is in the cell change comprises:
determining to transmit a handover command to the terminal based on a measurement report of the terminal;
transmitting, at the target base station, all PDUs belonging to the target PDU set completely comprises:
transmitting all PDUs belonging to the target PDU set to the target base station in case of determining to transmit the handover command to the terminal.

8. The method of any one of claims 1 to 6, wherein the target PDU set is downlink data, and the target communication device is a target base station;
determining that the terminal is in the cell change comprises:
receiving a handover request transmitted from a source base station; and
transmitting handover request acknowledgement information to the source base station, wherein the handover request acknowledgement information is used for triggering the source base station to transmit a handover command to the terminal;
transmitting, at the target base station, all PDUs belonging to the target PDU set completely comprises:
receiving all PDUs belonging to the target PDU set transmitted from the source base station; and
transmitting all PDUs belonging to the target PDU set to the terminal after the terminal completes handover.

9. The method of any one of claims 1 to 6, wherein the target PDU set is uplink data, and the target communication device is a terminal;
determining that the terminal is in the cell change comprises:
receiving a handover command transmitted from a source base station; and
determining, based on the handover command, to disconnect from the source base station and access a target base station;
transmitting, at the target base station, all PDUs belonging to the target PDU set completely comprises:
transmitting all PDUs belonging to the target PDU set to the target base station after the terminal completes handover and accesses the target base station.

10. The method of claim 1, wherein the transmission processing mode of the target PDU set comprises:
transmitting a first data packet at a target base station, wherein the first data packet comprises a PDU in the target PDU set that is not transmitted to a communication peer and/or a PDU that is not successfully transmitted to a communication peer.

11. The method of any one of claims 1 to 10, wherein the target PDU set is downlink data, and the target communication device is a source base station; determining that the terminal is in the cell change comprises:
receiving a handover success message transmitted from the target base station after the source base station transmits a conditional handover configuration to the terminal;
transmitting the first data packet at the target base station comprises:
transmitting the first data packet to the target base station after the source base station receives the handover success message.

12. The method of any one of claims 1 to 10, wherein the target PDU set is downlink data, and the target communication device is a target base station;
determining that the terminal is in the cell change comprises:
transmitting a handover success message to a source base station after the terminal completes handover and accesses the target base station;
transmitting the first data packet at the target base station comprises:
receiving the first data packet transmitted from the source base station; and
transmitting the first data packet to the terminal.

13. The method of any one of claims 1 to 10, wherein the target PDU set is downlink data, and the target communication device is a source base station;
determining that the terminal is in the cell change comprises:
determining to transmit a handover command to the terminal based on a measurement report of the terminal;
transmitting the first data packet at the target base station comprises:
transmitting the first data packet to the target base station in case of determining to transmit the handover command to the terminal.

14. The method of any one of claims 1 to 10, wherein the target PDU set is downlink data, and the target communication device is a target base station;
determining that the terminal is in the cell change comprises:
receiving a handover request transmitted from a source base station; and
transmitting handover request acknowledgement information to the source base station, wherein the handover request acknowledgement information is used for triggering the source base station to transmit a handover command to the terminal;
transmitting the first data packet at the target base station comprises:
receiving the first data packet transmitted from the source base station; and
transmitting the first data packet to the terminal after the terminal completes handover.

15. The method of any one of claims 1 to 10, wherein the target PDU set is uplink data, and the target communication device is a terminal;
determining that the terminal is in the cell change comprises:
receiving a handover command transmitted from a source base station; and
determining, based on the handover command, to disconnect from the source base station and access a target base station;
transmitting the first data packet at the target base station comprises:
transmitting the first data packet to the target base station after the terminal completes handover and accesses the target base station.

16. The method of any one of claims 1 to 10, wherein the target PDU set is uplink data, and the target communication device is a terminal;
determining that the terminal is in the cell change comprises:
determining that the terminal is in a conditional handover scenario based on a configuration of a target cell and a handover condition, and accessing the target base station in case that the handover condition is satisfied;
transmitting the first data packet at the target base station comprises:
transmitting the first data packet to the target base station after the terminal completes handover and accesses the target base station.

17. The method of claim 1, wherein the transmission processing mode of the target PDU set comprises:
dropping a second data packet, wherein the second data packet is a PDU in the target PDU set that is not transmitted to a communication peer and/or a PDU that is not successfully transmitted to a communication peer.

18. The method of any one of claims 1 to 17, wherein the target PDU set is downlink data, and the target communication device is a source base station;
determining that the terminal is in the cell change comprises:
receiving a handover success message transmitted from the target base station after the source base station transmits a conditional handover configuration to the terminal;
dropping the second data packet comprises:
dropping the second data packet after the source base station receives the handover success message.

19. The method of any one of claims 1 to 17, wherein the target PDU set is downlink data, and the target communication device is a source base station;
determining that the terminal is in the cell change comprises:
determining to transmit a handover command to the terminal based on a measurement report of the terminal;
dropping the second data packet comprises:
dropping the second data packet in case of determining to transmit the handover command to the terminal.

20. The method of any one of claims 1 to 17, wherein the target PDU set is uplink data, and the target communication device is a terminal;
determining that the terminal is in the cell change comprises:
receiving a handover command transmitted from a source base station; and
determining, based on the handover command, to disconnect from the source base station and access a target base station;
dropping the second data packet comprises:
dropping the second data packet after receiving the handover command.

21. The method of any one of claims 1 to 17, wherein the target PDU set is uplink data, and the target communication device is a terminal;
determining that the terminal is in the cell change comprises:
determining that the terminal is in a conditional handover scenario based on a configuration of a target cell and a handover condition, and accessing the target base station in case that the handover condition is satisfied;
dropping the second data packet comprises:
dropping the second data packet in case of determining that the handover condition is satisfied.

22. The method of any one of claims 1 to 21, wherein the target PDU set is uplink data, and the target communication device is a source base station or a target base station;
the method further comprises:
transmitting an identifier of the target PDU set to the terminal, the identifier being used for indicating the target PDU set using the transmission processing mode.

23. A target communication device, comprising:
a memory for storing a computer program; a transceiver for transmitting and receiving data under control of a processor; a processor for reading the computer program in the memory and performing the following operations:
determining that there is a target protocol data unit, PDU, set that is not transmitted completely and successfully in case of determining that a terminal is in a cell change, wherein all or part of PDUs belonging to the target PDU set that is not transmitted completely and successfully are not transmitted or are not transmitted successfully; and
determining a transmission processing mode of the target PDU set.

24. The target communication device of claim 23, wherein the transmission processing mode of the target PDU set comprises:
transmitting, at a source base station, all PDUs belonging to the target PDU set completely, the source base station being a base station which the terminal accesses before handover.

25. The target communication device of any one of claim 23 or 24, wherein the target PDU set is downlink data, and the target communication device is a source base station;
determining that the terminal is in the cell change comprises:
determining to transmit a handover command to the terminal based on a measurement report of the terminal;
transmitting, at the source base station, all PDUs belonging to the target PDU set completely comprises:
transmitting all PDUs belonging to the target PDU set to the terminal before transmitting the handover command to the terminal.

26. The target communication device of any one of claim 23 or 24, wherein the target PDU set is uplink data, and the target communication device is a terminal;
determining that the terminal is in the cell change comprises:
receiving a handover command transmitted from a source base station; and
determining, based on the handover command, to disconnect from the source base station and access a target base station, wherein the target base station is a base station which the terminal accesses after completing handover;
transmitting, at the source base station, all PDUs belonging to the target PDU set completely comprises:
transmitting all PDUs belonging to the target PDU set to the source base station before disconnecting from the source base station.

27. The target communication device of claim 26, wherein a last uplink transmitted PDU of all PDUs belonging to the target PDU set comprises an end marker, and the end marker is used for indicating that the PDU is the last PDU of all PDUs belonging to the target PDU set.

28. The target communication device of claim 23, wherein the transmission processing mode of the target PDU set comprises:
transmitting, at a target base station, all PDUs belonging to the target PDU set completely.

29. The target communication device of any one of claims 23 to 28, wherein the target PDU set is downlink data, and the target communication device is a source base station;
determining that the terminal is in the cell change comprises:
determining to transmit a handover command to the terminal based on a measurement report of the terminal;
transmitting, at the target base station, all PDUs belonging to the target PDU set completely comprises:
transmitting all PDUs belonging to the target PDU set to the terminal before transmitting the handover command to the terminal.
transmitting all PDUs belonging to the target PDU set to the target base station in case of determining to transmit the handover command to the terminal.

30. The target communication device of any one of claims 23 to 28, wherein the target PDU set is downlink data, and the target communication device is a target base station;
determining that the terminal is in the cell change comprises:
receiving a handover request transmitted from a source base station; and
transmitting handover request acknowledgement information to the source base station, wherein the handover request acknowledgement information is used for triggering the source base station to transmit a handover command to the terminal;
transmitting, at the target base station, all PDUs belonging to the target PDU set completely comprises:
receiving all PDUs belonging to the target PDU set transmitted from the source base station; and
transmitting all PDUs belonging to the target PDU set to the terminal after the terminal completes handover.

31. The target communication device of any one of claims 23 to 28, wherein the target PDU set is uplink data, and the target communication device is a terminal;
determining that the terminal is in the cell change comprises:
receiving a handover command transmitted from a source base station; and
determining, based on the handover command, to disconnect from the source base station and access a target base station;
transmitting, at the target base station, all PDUs belonging to the target PDU set completely comprises:
transmitting all PDUs belonging to the target PDU set to the target base station after the terminal completes handover and accesses the target base station.

32. The target communication device of claim 23, wherein the transmission processing mode of the target PDU set comprises:
transmitting a first data packet at a target base station, wherein the first data packet comprises a PDU in the target PDU set that is not transmitted to a communication peer and/or a PDU that is not successfully transmitted to a communication peer.

33. The target communication device of any one of claims 23 to 32, wherein the target PDU set is downlink data, and the target communication device is a source base station;
determining that the terminal is in the cell change comprises:
receiving a handover success message transmitted from the target base station after the source base station transmits a conditional handover configuration to the terminal;
transmitting the first data packet at the target base station comprises:
transmitting the first data packet to the target base station after the source base station receives the handover success message.

34. The target communication device of any one of claims 23 to 32, wherein the target PDU set is downlink data, and the target communication device is a target base station;
determining that the terminal is in the cell change comprises:
transmitting a handover success message to a source base station after the terminal completes handover and accesses the target base station;
transmitting the first data packet at the target base station comprises:
receiving the first data packet transmitted from the source base station; and
transmitting the first data packet to the terminal.

35. The target communication device of any one of claims 23 to 32, wherein the target PDU set is downlink data, and the target communication device is a source base station;
determining that the terminal is in the cell change comprises:
determining to transmit a handover command to the terminal based on a measurement report of the terminal;
transmitting the first data packet at the target base station comprises:
transmitting the first data packet to the target base station in case of determining to transmit the handover command to the terminal.

36. The target communication device of any one of claims 23 to 32, wherein the target PDU set is downlink data, and the target communication device is a target base station;
determining that the terminal is in the cell change comprises:
receiving a handover request transmitted from a source base station; and
transmitting handover request acknowledgement information to the source base station, wherein the handover request acknowledgement information is used for triggering the source base station to transmit a handover command to the terminal;
transmitting the first data packet at the target base station comprises:
receiving the first data packet transmitted from the source base station; and
transmitting the first data packet to the terminal after the terminal completes handover.

37. The target communication device of any one of claims 23 to 32, wherein the target PDU set is uplink data, and the target communication device is a terminal;
determining that the terminal is in the cell change comprises:
receiving a handover command transmitted from a source base station; and
determining, based on the handover command, to disconnect from the source base station and access a target base station;
transmitting the first data packet at the target base station comprises:
transmitting the first data packet to the target base station after the terminal completes handover and accesses the target base station.

38. The target communication device of any one of claims 23 to 32, wherein the target PDU set is uplink data, and the target communication device is a terminal;
determining that the terminal is in the cell change comprises:
determining that the terminal is in a conditional handover scenario based on a configuration of a target cell and a handover condition, and accessing the target base station in case that the handover condition is satisfied;
transmitting the first data packet at the target base station comprises:
transmitting the first data packet to the target base station after the terminal completes handover and accesses the target base station.

39. The target communication device of claim 23, wherein the transmission processing mode of the target PDU set comprises:
dropping a second data packet, wherein the second data packet is a PDU in the target PDU set that is not transmitted to a communication peer and/or a PDU that is not successfully transmitted to a communication peer.

40. The target communication device of any one of claims 23 to 39, wherein the target PDU set is downlink data, and the target communication device is a source base station;
determining that the terminal is in the cell change comprises:
receiving a handover success message transmitted from the target base station after the source base station transmits a conditional handover configuration to the terminal;
dropping the second data packet comprises:
dropping the second data packet after the source base station receives the handover success message.

41. The target communication device of any one of claims 23 to 39, wherein the target PDU set is downlink data, and the target communication device is a source base station;
determining that the terminal is in the cell change comprises:
determining to transmit a handover command to the terminal based on a measurement report of the terminal;
dropping the second data packet comprises:
dropping the second data packet in case of determining to transmit the handover command to the terminal.

42. The target communication device of any one of claims 23 to 39, wherein the target PDU set is uplink data, and the target communication device is a terminal;
determining that the terminal is in the cell change comprises:
receiving a handover command transmitted from a source base station; and
determining, based on the handover command, to disconnect from the source base station and access a target base station;
dropping the second data packet comprises:
dropping the second data packet after receiving the handover command.

43. The target communication device of any one of claims 23 to 39, wherein the target PDU set is uplink data, and the target communication device is a terminal;
determining that the terminal is in the cell change comprises:
determining that the terminal is in a conditional handover scenario based on a configuration of a target cell and a handover condition, and accessing the target base station in case that the handover condition is satisfied;
dropping the second data packet comprises:
dropping the second data packet in case of determining that the handover condition is satisfied.

44. The target communication device of any one of claims 23 to 39, wherein the target PDU set is uplink data, and the target communication device is a source base station or a target base station;
the operations further comprise:
transmitting an identifier of the target PDU set to the terminal, the identifier being used for indicating the target PDU set using the transmission processing mode.

45. An apparatus for data transmission, comprising:
a first determining module, used for determining that there is a target protocol data unit, PDU, set that is not transmitted completely and successfully in case of determining that a terminal is in a cell change, wherein all or part of PDUs belonging to the target PDU set that is not transmitted completely and successfully are not transmitted or are not transmitted successfully; and
a second determining module, used for determining a transmission processing mode of the target PDU set.

46. The apparatus of claim 45, wherein the transmission processing mode of the target PDU set comprises:
transmitting, at a source base station, all PDUs belonging to the target PDU set completely, the source base station being a base station which the terminal accesses before handover.

47. The apparatus of any one of claim 45 or 46, wherein the target PDU set is downlink data, and the target communication device is a source base station;
the first determining module is further used for:
determining to transmit a handover command to the terminal based on a measurement report of the terminal;
the transmission processing mode of the target PDU set comprises:
transmitting all PDUs belonging to the target PDU set to the terminal before transmitting the handover command to the terminal.

48. The apparatus of any one of claim 45 or 46, wherein the target PDU set is uplink data, and the target communication device is a terminal;
the first determining module further comprises:
a first receiving unit, used for receiving a handover command transmitted from a source base station; and
a first determining unit, used for determining, based on the handover command, to disconnect from the source base station and access a target base station, wherein the target base station is a base station which the terminal accesses after completing handover;
the transmission processing mode of the target PDU set comprises:
transmitting all PDUs belonging to the target PDU set to the source base station before disconnecting from the source base station.

49. The apparatus of claim 48, wherein a last uplink transmitted PDU of all PDUs belonging to the target PDU set comprises an end marker, and the end marker is used for indicating that the PDU is the last PDU of all PDUs belonging to the target PDU set.

50. The apparatus of claim 45, wherein the transmission processing mode of the target PDU set comprises:
transmitting, at a target base station, all PDUs belonging to the target PDU set completely.

51. The apparatus of any one of claims 45 to 50, wherein the target PDU set is downlink data, and the target communication device is a source base station;
the first determining module is further used for:
determining to transmit a handover command to the terminal based on a measurement report of the terminal;
the transmission processing mode of the target PDU set comprises:
transmitting all PDUs belonging to the target PDU set to the target base station in case of determining to transmit the handover command to the terminal.

52. The apparatus of any one of claims 45 to 50, wherein the target PDU set is downlink data, and the target communication device is a target base station;
the first determining module further comprises:
a second receiving unit, used for receiving a handover request transmitted from a source base station; and
a first transmitting unit, used for transmitting handover request acknowledgement information to the source base station, wherein the handover request acknowledgement information is used for triggering the source base station to transmit a handover command to the terminal;
the transmission processing mode of the target PDU set comprises:
receiving all PDUs belonging to the target PDU set transmitted from the source base station; and
transmitting all PDUs belonging to the target PDU set to the terminal after the terminal completes handover.

53. The apparatus of any one of claims 45 to 50, wherein the target PDU set is uplink data, and the target communication device is a terminal;
the first determining module further comprises:
a third receiving unit, used for receiving a handover command transmitted from a source base station; and
a second determining unit, used for determining, based on the handover command, to disconnect from the source base station and access a target base station;
the transmission processing mode of the target PDU set comprises:
transmitting all PDUs belonging to the target PDU set to the target base station after the terminal completes handover and accesses the target base station.

54. The apparatus of claim 45, wherein the transmission processing mode of the target PDU set comprises:
transmitting a first data packet at a target base station, wherein the first data packet comprises a PDU in the target PDU set that is not transmitted to a communication peer and/or a PDU that is not successfully transmitted to a communication peer.

55. The apparatus of any one of claims 45 to 54, wherein the target PDU set is downlink data, and the target communication device is a source base station;
the first determining module further comprises:
a fourth receiving unit, used for receiving a handover success message transmitted from the target base station after the source base station transmits a conditional handover configuration to the terminal;
the transmission processing mode of the target PDU set comprises:
transmitting the first data packet to the target base station after the source base station receives the handover success message.

56. The apparatus of any one of claims 45 to 54, wherein the target PDU set is downlink data, and the target communication device is a target base station;
the first determining module further comprises:
a second transmitting unit, used for transmitting a handover success message to a source base station after the terminal completes handover and accesses the target base station;
the transmission processing mode of the target PDU set comprises:
receiving the first data packet transmitted from the source base station; and
transmitting the first data packet to the terminal.

57. The apparatus of any one of claims 45 to 54, wherein the target PDU set is downlink data, and the target communication device is a source base station;
the first determining module is further used for:
determining to transmit a handover command to the terminal based on a measurement report of the terminal;
the transmission processing mode of the target PDU set comprises:
transmitting the first data packet to the target base station in case of determining to transmit the handover command to the terminal.

58. The apparatus of any one of claims 45 to 54, wherein the target PDU set is downlink data, and the target communication device is a target base station;
the first determining module further comprises:
a fifth receiving unit, used for receiving a handover request transmitted from a source base station; and
a third transmitting unit, used for transmitting handover request acknowledgement information to the source base station, wherein the handover request acknowledgement information is used for triggering the source base station to transmit a handover command to the terminal;
the transmission processing mode of the target PDU set comprises:
receiving the first data packet transmitted from the source base station; and
transmitting the first data packet to the terminal after the terminal completes handover.

59. The apparatus of any one of claims 45 to 54, wherein the target PDU set is uplink data, and the target communication device is a terminal;
the first determining unit further comprises:
a sixth receiving unit, used for receiving a handover command transmitted from a source base station; and
a third determining unit, used for determining, based on the handover command, to disconnect from the source base station and access a target base station;
the transmission processing mode of the target PDU set comprises:
transmitting the first data packet to the target base station after the terminal completes handover and accesses the target base station.

60. The apparatus of any one of claims 45 to 54, wherein the target PDU set is uplink data, and the target communication device is a terminal;
the first determining module is further used for:
determining that the terminal is in a conditional handover scenario based on a configuration of a target cell and a handover condition, and accessing the target base station in case that the handover condition is satisfied;
the transmission processing mode of the target PDU set comprises:
transmitting the first data packet to the target base station after the terminal completes handover and accesses the target base station.

61. The apparatus of claim 45, wherein the transmission processing mode of the target PDU set comprises:
dropping a second data packet, wherein the second data packet is a PDU in the target PDU set that is not transmitted to a communication peer and/or a PDU that is not successfully transmitted to a communication peer.

62. The apparatus of any one of claims 45 to 61, wherein the target PDU set is downlink data, and the target communication device is a source base station;
the first determining module further comprises:
a seventh receiving unit, used for receiving a handover success message transmitted from a target base station after the source base station transmits a conditional handover configuration to the terminal;
the transmission processing mode of the target PDU set comprises:
dropping a second data packet after the source base station receives the handover success message.

63. The apparatus of any one of claims 45 to 61, wherein the target PDU set is downlink data, and the target communication device is a source base station;
the first determining module is further used for:
determining to transmit a handover command to the terminal based on a measurement report of the terminal;
the transmission processing mode of the target PDU set comprises:
dropping a second data packet in case of determining to transmit the handover command to the terminal.

64. The apparatus of any one of claims 45 to 61, wherein the target PDU set is uplink data, and the target communication device is a terminal;
the first determining module further comprises:
an eighth receiving unit, used for receiving a handover command transmitted from a source base station; and
a fourth determining unit, used for determining, based on the handover command, to disconnect from the source base station and access a target base station;
the transmission processing mode of the target PDU set comprises:
dropping the second data packet after receiving the handover command.

65. The apparatus of any one of claims 45 to 61, wherein the target PDU set is uplink data, and the target communication device is a terminal;
the first determining module is further used for:
determining that the terminal is in a conditional handover scenario based on a configuration of a target cell and a handover condition, and accessing the target base station in case that the handover condition is satisfied;
the transmission processing mode of the target PDU set comprises:
dropping the second data packet in case of determining that the handover condition is satisfied.

66. The apparatus of any one of claims 45 to 65, wherein the target PDU set is uplink data, and the target communication device is a source base station or a target base station;
the apparatus further comprises:
a transmitting module, used for transmitting an identifier of the target PDU set to the terminal, the identifier being used for indicating the target PDU set using the transmission processing mode.

67. A processor-readable storage medium storing a computer program, wherein the computer program is used to cause a processor to perform the method of any one of claims 1 to 22.
